(19) Europäisches Patentamt / European Patent Office / Office européen des brevets

(11) **EP 2 696 468 A1**

(12) **EUROPEAN PATENT APPLICATION**
published in accordance with Art. 153(4) EPC

(43) Date of publication:
**12.02.2014 Bulletin 2014/07**

(21) Application number: **12767759.9**

(22) Date of filing: **30.03.2012**

(51) Int Cl.:
*H02J 17/00* (2006.01)

(86) International application number:
**PCT/JP2012/058758**

(87) International publication number:
**WO 2012/137691 (11.10.2012 Gazette 2012/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.04.2011 JP 2011081722**

(71) Applicant: **NEC CASIO Mobile Communications, Ltd.**
**Kawasaki-shi, Kanagawa 211-8666 (JP)**

(72) Inventors:
• **AIKAWA Makoto**
**Tokyo 100-8220 (JP)**
• **ICHIKAWA Katsuei**
**Tokyo 100-8220 (JP)**
• **KITANI Mitsuhiro**
**Tokyo 100-8220 (JP)**

(74) Representative: **Vossius & Partner**
**Siebertstrasse 4**
**81675 München (DE)**

(54) **POWER TRANSMITTING DEVICE, POWER RECEIVING DEVICE, POWER TRANSMITTING METHOD OF POWER TRANSMITTING DEVICE, AND POWER RECEIVING METHOD OF POWER RECEIVING DEVICE**

(57) A power transmitting device transmitting electric power to a power receiving device includes a power transmitter (110) transmitting electric power in a contactless manner at a resonant frequency having a predetermined relation with a resonant frequency of a part, the part being provided in the power receiving device and receiving electric power, a data receiver (112) receiving from the power receiving device a random number value generated by the power receiving device each time electric power transmission of the power transmitter (110) is started, and a controller (117) determining whether or not all random number values satisfy predetermined condition. When the condition is satisfied, the controller (117) continues electric power transmission via the power transmitter (110). When the condition is not satisfied, the controller (117) temporarily stops electric power transmission, and then resumes electric power transmission via the power transmitter (110), and receives a new random number value via the date receiver (112) from the power receiving device. The controller (117) repeats stop and subsequent resuming of transmission of the electric power, and reception of a new random number value via the data receiver (112) until the new random number value satisfies the predetermined condition.

FIG. 1

## Description

Technical Field

The present invention relates to a power transmitting device, a power receiving device, a power transmitting method of the power transmitting device, and a power receiving method of the power receiving device in a case where electric power is transmitted or received by contactless power transmission.

Background Art

There is known a technique relating to noncontact power transmission (contactless power transmission) that uses electromagnetic induction, a magnetic resonance phenomenon, or the like to enable electric power to be transmitted without a contact terminal. For example, Patent Literature 1 discloses a technique relating to a contactless power transmitting method using the magnetic resonance phenomenon (magnetic resonance method). The magnetic resonance method possesses the feature that transmission efficiency is not lowered even when a distance between a primary coil provided in a power transmitting device and a secondary coil provided in a power receiving device, or a positional displacement between the coils becomes larger than in the case of the electromagnetic induction. For this reason, using the magnetic resonance method enables electric power to be simultaneously transmitted from one power transmitting device comprising one primary coil to a plurality of power receiving devices.

Citation List

Patent Literature

Unexamined Japanese Patent Application Kokai Publication No. 2010-63245.

Summary of Invention

Technical Problem

However, according to the configuration disclosed in Patent Literature 1, when one power transmitting device comprising one primary coil charges a plurality of power receiving devices, power transmission control depending on a charged state or the like of each power receiving device needs to be performed to transmit an appropriate amount of electric power to each power receiving device. When such power transmission control is performed, a communication process is executed between the power transmitting device and the power receiving devices. There are two kinds of communication processes. One is two-way communication between the power transmitting device and the power receiving device, and the other is one-way communication from the power receiving device to the power transmitting device.
When the two-way communication is performed, a data transmitter provided with a modulation circuit and transmitting data, and a data receiver provided with a demodulation circuit and receiving data are necessary on each of the transmitting side and the receiving side. Accordingly, there are cases where the manufacturing cost is increased due to the increase in the number of circuit components. Meanwhile, when the one-way communication is performed, it suffices that the data transmitter is provided only on the transmitting side, and the data receiver is provided only on the receiving side. Accordingly, compared with the case of the two-way communication, the manufacturing cost is decreased, because the number of circuit components is decreased. However, in the case of the one-way communication, information from the power transmitter is not communicated to the power receiving device. For this reason, it is difficult for the power transmitter to perform power transmission so as to cause a plurality of the power receiving devices to operate cooperatively. Therefore, a new method is desired which enables appropriate power transmission by the one-way communication when contactless power transmission is performed.
In view of the above-described problem, the present invention was made. An object of the present invention is to provide a power transmitting device, a power receiving device, a power transmitting method of the power transmitting device, and a power receiving method of the power receiving device that enable appropriate power transmission by the one-way communication when contactless power transmission is performed.

Solution to Problem

In order to accomplish the above-described object, a power transmitting device according to a first aspect of the present invention is a power transmitting device that transmits electric power to at least one power receiving device in a contactless manner, comprising:

a power transmitter possessing a power transmitting side resonant frequency that is a resonant frequency having a predetermined relation with a power receiving side resonant frequency that is a resonant frequency of a part, the part being provided in the power receiving device and receiving the electric power, and adapted to transmit the electric power at the power transmitting side resonant frequency in a contactless manner;

a data receiver adapted to receive, from the power receiving device, a command including a random number value for representing a power receiving state of the power receiving device, when the power transmitter is adapted to start to transmit the electric power to the power receiving device, wherein the random number value is generated by the power receiving device each time reception of the electric power is started by start of transmission of the electric power; and

a controller adapted to perform control in which the controller is adapted to determine whether or not all of the random number value satisfy a predetermined condition; when the predetermined condition is satisfied, the controller is adapted to continue transmission of the electric power to the power receiving device via the power transmitter; and when the predetermined condition is not satisfied, the controller is adapted to perform a reset process of temporarily stopping transmission of the electric power to the power receiving device, and then resuming the transmission of the electric power via the power transmitter to receive the command including a new random number value from the power receiving device via the data receiver, and perform control of repeating stopping and subsequent resuming of the transmission of the electric power, and reception of the command including a further new random number value via the data receiver until the new random number value satisfies the predetermined condition.

A power receiving device according to a second aspect of the present invention is a power receiving device that receives electric power from a power transmitting device transmitting the electric power in a contactless manner, the power receiving device having information that shows corresponding relation between random number values and electric power receiving efficiencies,

the power receiving device comprising:

a power receiver with a variable resonant frequency including a same frequency as a power transmitting side resonant frequency that is a resonant frequency of a power transmitter, the power transmitter being provided in the power transmitting device and adapted to transmit the electric power, the power receiver being adapted to receive the electric power transmitted from the power transmitting device, at a power receiving side resonant frequency that is a resonant frequency controlled within the variable range of the variable resonant frequency;

a random number value generator adapted to generate a random number value;

a data transmitter adapted to transmitting data to the power transmitting device; and

a controller adapted to perform control in which the controller is adapted to start reception of the electric power at a resonant frequency set in advance, by start of transmission of the electric power from the power transmitting device, and each time the reception of the electric power is started, the controller is adapted to generate the random number value via the random number value generator, generate a command including the generated random number value, and transmit the generated command to the power transmitting device via the data transmitter, wherein on the basis of an electric power receiving efficiency corresponding to the generated random number value, the controller is adapted to control the power receiving side resonant frequency within the variable range of the variable resonant frequency to continue reception of the electric power by the power receiver.

A power transmitting method according to a third aspect of the present invention is a power transmitting method for transmitting electric power to at least one power receiving device by a power transmitting device in a contactless manner, the method comprising:

a power transmitting step of transmitting the electric power in a contactless manner at a power transmitting side resonant frequency that is a resonant frequency having a predetermined relation with a power receiving resonant frequency that is a resonant frequency of a part, the part being provided in the power receiving device and receiving the electric power;

a data receiving step of receiving, from the power receiving device, a command including a random number value for representing a power receiving state of the power receiving device, when transmission of the electric power to the power receiving device is started at the power transmitting step, wherein the random number value is generated by the power receiving device each time the power receiving device starts to receive the electric power by start of the transmission of the electric power; and

a determining step of determining whether or not all of the random number value received at the data receiving step satisfy a predetermined condition;

an electric power transmission continuing step of continuing transmission of the electric power to the power receiving device when it is determined at the determining step that all of the random number values satisfy the predetermined condition; and

a repeating step of temporarily stopping transmission of the electric power to the power receiving device, and returning to the power transmitting step when it is determined at the determining step that all of the random number value do not satisfy the predetermined condition.

A power receiving method according to a fourth aspect of the present invention is a power receiving method for receiving electric power by a power receiving device from a power transmitting device transmitting the electric power in a contactless manner, the method comprising:

a random number value generating step of generating a random number value each time reception of the electric power is started by start of transmission of the electric power from the power transmitting device;

a data transmitting step of generating a command including the random number value generated at the random number value generating step, and transmitting the generated command to the power transmitting device; and

a power receiving step of setting, to a predetermined resonance frequency, a power receiving side resonant frequency that is a resonant frequency of a part, the part being provided in the power receiving device and receiving the electric power, and then determining an electric power receiving efficiency corresponding to the random number value generated at the random number value generating step on the basis of information that shows corresponding relation between random number values and electric power receiving efficiencies, and performing control based on the determined electric power receiving efficiency to continue reception of the electric power transmitted from the power transmitting device.

Advantageous Effects of Invention

According to the present invention, it is possible to provide the power transmitting device, the power receiving device, the power transmitting method of the power transmitting device, and the power receiving method of the power receiving device that enable appropriate power transmission control by the one-way communication when contactless power transmission is performed.

Brief Description of Drawings

FIG. 1 illustrates a contactless power transmitting system constituted by a power transmitting device and a power receiving device according to an embodiment 1 of the present invention;

FIG. 2 illustrates an arrangement example where one power transmitting device charges a plurality of power receiving devices;

FIGS. 3A to 3C illustrate examples of a charge control table;

FIGS. 4A to 4D illustrate format examples of various control commands;

FIG. 5 is a flowchart for describing a power transmitting process;

FIGS. 6A and 6B illustrate examples of a charge control table;

FIG. 7 is a flowchart for illustrating a power receiving process;

FIG. 8 illustrates an example of a resonating circuit constituting a power receiver of the power receiving device;

FIGS. 9A to 9D illustrate examples of the corresponding relation between a random number value and an electric power receiving efficiency of the power receiving device;

FIG. 10 illustrates another example of the resonating circuit constituting the power receiver of the power receiving device;

FIGS. 11A to 11D illustrate other examples of the corresponding relation between a random number value and an electric power receiving efficiency of the power receiving device;

FIG. 12 illustrates an example of the minimum configurations of the power transmitting device and the power receiving device according to the embodiment 1;

FIG. 13 illustrates a contactless power transmitting system constituted by the power transmitting device and the power receiving device according to an embodiment 2 of the present invention;

FIG. 14 illustrates a format example of an initializing control commands according to the embodiment 2;

FIGS. 15A and 15B illustrate examples of the charge control table according to the embodiment 2;

FIG. 16 illustrates an example of power receiving control method at the time of controlling electric power reception of a plurality of power receiving device according to an embodiment 3 of the present invention, and examples of combination of the random number values at that time;

FIG. 17 illustrates an example of power receiving control method at the time of controlling electric power reception of a plurality of power receiving device according to the embodiment 3, and examples of combination of the random number values at that time;

FIG. 18 illustrates an example of power receiving control method at the time of controlling electric power reception of a plurality of power receiving device according to the embodiment 3, and examples of combination of the random number values at that time;

FIG. 19 illustrates an example of power receiving control method at the time of controlling electric power reception of a plurality of power receiving device according to the embodiment 3, and an example of combination of the random number values at that time;

FIGS. 20A and 20B illustrate other examples of the corresponding relation between a random number value and an electric power receiving efficiency;

FIG. 21 illustrates an example of a configuration of the power transmitting device according to the embodiment 3 of the present invention;

FIG. 22 illustrates an example of a configuration of the power receiving device according to the embodiment 3 of the present invention;

FIG. 23 is a flowchart showing a power transmitting process flow of the power transmitting device according to the embodiment 3 of the present invention; and

FIG. 24 is a flowchart showing a power transmitting process flow of the power receiving device according to the embodiment 3 of the present invention.

Description of Embodiments

In the following, several embodiments of the present invention will be described. The embodiments described below are intended for explaining contents of the invention, and do not limit the scope of the present invention. Accordingly, a person skilled in the art is allowed to adopt embodiments in which respective or all elements of the below-described embodiments are replaced with equivalents thereof, and these embodiments are also encompassed in the scope of the present invention.

(Embodiment 1)

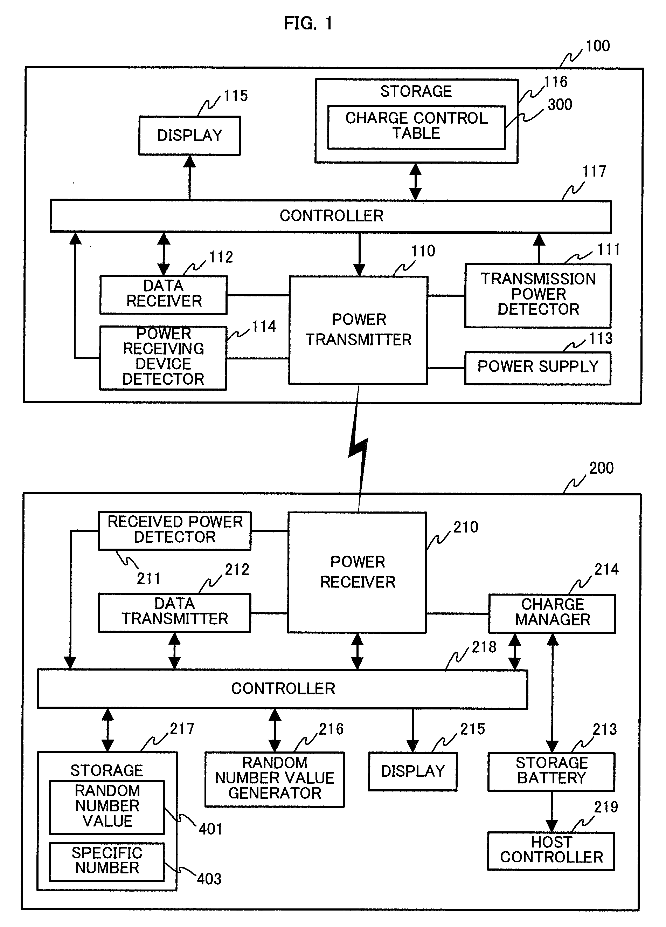

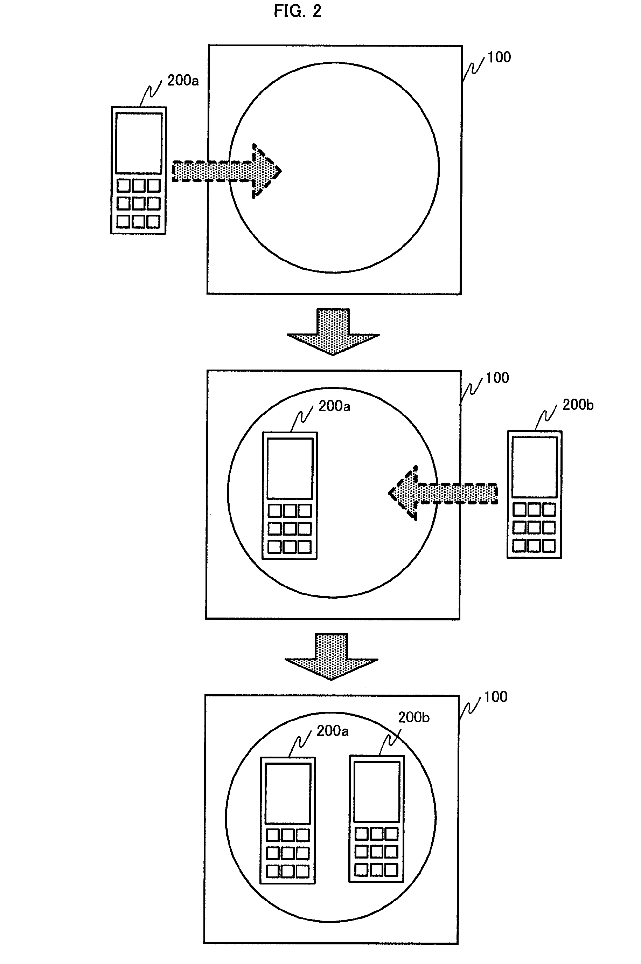

FIG. 1 illustrates a contactless power transmitting system constituted by a power transmitting device and a power receiving device according to the embodiment 1. The power transmitting device 100 transmits electric power to the power receiving device 200 in a contactless manner. The power receiving device 200 receives electric power transmitted from the power transmitting device 100, and uses the received electric power to charge a main body of the device. As illustrated in FIG. 2, the power transmitting device 100 is a charging stand (battery charger) on which one or more power receiving devices 200 are placed, and the power transmitting device 100 charges the placed power receiving device 200. FIG. 2 illustrates a situation where the power receiving device 200a is placed on the power transmitting device 100, and is started to be charged, and the power receiving device 200b is further placed on the power transmitting device 100, and is charged. The power receiving device 200 is an arbitrary device such as a cellular phone, a digital camera, a portable music player, a wireless headset, and the like, that comprises a rechargeable battery. The power transmitting device 100 and the power receiving device 200 possesses a function of performing data communication to confirm a charge state (for example, charge is being performed, is completed, is stopped, or is unable to be performed) of the power receiving device 200. In the following, it is assumed that data is transmitted only in the one-way direction from the power receiving device 200 to the power transmitting device 100.

(Configuration of Power Transmitting Device)

Referring to FIG. 1, an internal configuration of the power transmitting device 100 according to the embodiment 1 is described. The power transmitting device 100 comprises a power transmitter 110, a transmission power detector 111, a data receiver 112, an power supply 113, a power receiving device detector 114, a display 115, a storage 116, and a controller 117.

The power transmitter 110 comprises an oscillating circuit and a resonance circuit (not illustrated in the drawings) for example, and transmits electric power to the power receiving device 200. The resonance circuit comprises a primary coil and a capacitor. The resonance circuit is a circuit designed so as to oscillate at a predetermined resonance frequency. The power transmitter 110 uses an oscillation signal at the resonance frequency generated by the oscillating circuit, to convert a direct current (DC) voltage input from the power supply 113, into an alternating current (AC) voltage. The power transmitter 110 causes the converted AC voltage to resonate by the primary coil and the capacitor. Thereby, the power transmitter 110 generates transmission electric power, and uses a magnetic resonance phenomenon to supply the electric power to the power receiving device 200 in a contactless manner.

The transmission power detector 111 comprises an electric power meter, and detects an electric power value of the transmission electric power generated by the power transmitter 110.

The data receiver 112 comprises an antenna used in wireless access, a wireless communication circuit for communication, and a demodulator. The data receiver 112 performs communication in accordance with a predetermined communication protocol, and demodulates communication data received from the power receiving device 200, to obtain the data.

The power supply 113 is a DC power supply that supplies electric power to be transmitted in a contactless manner. The power supply 113 supplies an arbitrary electric power to the power transmitter 110.

The power receiving device detector 114 detects that a distance between the power receiving device 200 and the power transmitting device 100 is less than a predetermined distance, when the power receiving device 200 is placed on the power transmitting device 100, for example. Examples of a concrete detecting method are as follows. An electrostatic capacitance sensor is used to detect contact (approach) of the device. A magnet is incorporated in the power receiving device 200 in advance, and a magnetic sensor is used to detect intensity of a magnetic field from the magnet incorporated in the power receiving device 200 to detect contact (approach) of the device. Approach of a coil provided in the power receiving device 200 causes the magnetic field to be changed, and impedance that changes in accordance with the change in the magnetic field is detected to detect contact (approach) of the device. In an arbitrary method, the power receiving device detector 114 detects contact (short distance) between the power transmitting device 100 and the power receiving device 200.

The display 115 is constituted by a liquid crystal display (LCD), an organic electroluminescence panel, or a light emitting diode (LED) and a driving circuit, for example. The display 115 appropriately displays, to a user, information concerning a current charge state. For example, the display 115 displays a charge state by lighting or flashing of the LED, or displays a charge state by using the LCD to display a character string or an image. The display 115 displays a charge state in an arbitrary method that enables a user to recognize the displayed charge state.

The storage 116 is constituted by a nonvolatile semiconductor memory such as a read only memory (ROM) or a flash memory, or a volatile semiconductor memory such as a random access memory (RAM), for example. The storage 116 stores not only an operational program (application) to be executed by the controller 117, but also data to be used in performing each process, and data generated by performing each process. The storage 116 also stores a charge control table 300 to be used in power receiving control.

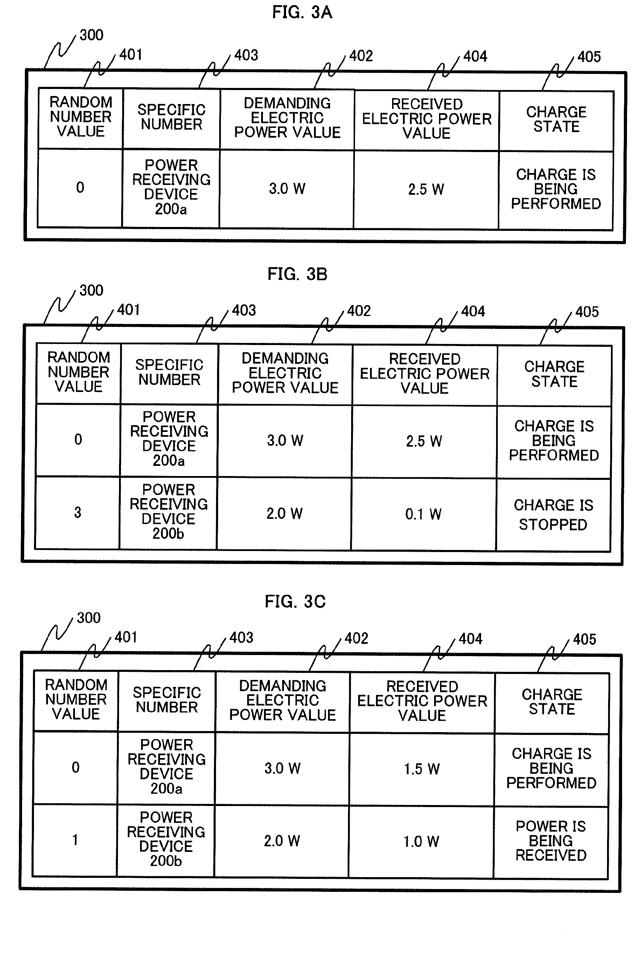

FIGS. 3A to 3C illustrate several examples of the charge control table 300. The charge control table 300 stores, as record, a random number value 401, a demanding electric power value 402, a specific number 403, a received electric power value 404, and a charge state 405 that are received from the same power receiving device 200, as illustrated in FIGS.3A to 3C. Each record in the charge control table 300 is identified by the random number value 401 or the specific number 403. The random number value 401 is obtained by receiving the below-described initializing command 501 from the power receiving device 200. The specific number 403 is obtained by receiving the below-described specific number command 502 from the power receiving device 200. The received electric power value 404 is obtained by receiving the below-described received electric power informing command 503 from the power receiving device 200. The charge state 405 is obtained by receiving the below-described charge state informing command 504 from the power receiving device 200. The power transmitting device 100 manages the charge control table 300 via the controller 117 so that the power transmitting device 100 grasps a condition concerning charge of each of the power receiving device 200.

Referring back to FIG. 1, the controller 117 is constituted by a central processing unit (CPU), a ROM, a RAM, and the like, for example. The controller 117 controls entire operation of the power transmitting device 100 in accordance with an operational program stored in the storage 116. The controller 117 controls operation of the elements ranging from the power transmitter 110 to the data receiver 119, to control the power transmitting device 100.

(Configuration of Power Receiving Device)

Next, an internal configuration of the power receiving device 200 according to the embodiment 1 is described. The power receiving device 200 comprises a power receiver 210, a received power detector 211, a data transmitter 212, a storage battery 213, a charge manager 214, a display 215, a random number value generator 216, a storage 217, a controller 218, and a host controller 219, as illustrated in FIG. 1.

The power receiver 210 comprises a power receiving circuit including a resonance circuit and a rectifying circuit. The power receiver 210 receives electric power transmitted from the power transmitting device 100. The resonance circuit comprises a secondary coil and a capacitor. The resonance circuit is a circuit designed so as to have the same resonant frequency as the resonant frequency that is used by the power transmitting device 100 for transmitting electric power. The power receiver 210 uses a magnetic resonance phenomenon to receive, as electric power, an AC voltage generated at the resonance circuit on the power receiving side by resonance between the resonance circuit on the power transmitting side and the resonance circuit on the power receiving side. The power receiver 210 converts the received AC voltage into a DC voltage by the rectifying circuit so that the converted DC voltage is used to charge the storage battery 213 via the charge manager 214.

The received power detector 211 comprises a wattmeter, for example, and detects an electric power value supplied to the power receiver 210.

The data transmitter 212 comprises an antenna used in wireless access, a wireless communication circuit for communication, and a modulator, for example. The data transmitter 212 performs communication in accordance with a predetermined communication protocol, modulates data to be transmitted to the power transmitting device 100, and transmits the modulated data. As a method of modulating data, a method using load modulation can be used. However, a different arbitrary modulating method can also be used. As a method of coding data, a method using non-return-to-zero (NRZ) or the Manchester code can be used. However, a different arbitrary coding method can also be used.

The storage battery 213 is constituted by a lithium-ion battery, a nickel-hydrogen battery, or the like. The storage battery 213 supplies electric power for driving the power receiving device 200. The storage battery 213 is rechargeable battery. The storage battery 213 can be an arbitrary battery that stores electric power transmitted from the power transmitting device 100.

The charge manager 214 monitors a DC voltage generated by the power receiver 210, a voltage of the storage battery 213, and the like. The charge manager 214 performs control such that the storage battery 213 is normally charged.

The display 215 is constituted by an LCD, an organic electroluminescence panel, or an LED and a driver circuit, for example. The display 215 outputs visual information and audio information to show a charge state to a user of the power receiving device 200.

The random number value generator 216 generates random number values. Representatively, the random number value generator 216 generates random number values that are integers within the number of the power receiving devices 200 that can be simultaneously charged by the power transmitting device 100. For example, when four power receiving devices 200 can be simultaneously charged by the power transmitting device 100, the random number value generator 216 generates four random number values of 0, 1, 2, and 3. As a method of generating random number values, a method of using a linear feedback shift register to generate pseudo random number values, or a method of using a thermal noise of an electric circuit to generate intrinsic random number values can be used. However, a different arbitrary method can be used to generate pseudo random number values or intrinsic random number values. In any of the methods, random number values are generated through a random process. A range of random number values is not limited to the number of the power receiving devices 200, and can also be set arbitrarily.

The storage 217 is constituted by a nonvolatile semiconductor memory such as a ROM or a flash memory, or a volatile semiconductor memory such as a RAM, for example. The storage 217 stores an operational program (application) executed by the controller 218, data necessary for performing each process, data generated by performing each process, and the like. The storage 217 stores the random number values 401 and the specific numbers 403 both of which are used in charge control. The specific numbers 403 are the numbers for uniquely identifying the power receiving devices 200. For example, the specific number 403 is a combination of the number uniquely allocated to a manufacturer of the power receiving device 200, and the serial number of a product that are managed by each manufacturer. Setting the specific number 403 as such number guarantees uniqueness of the unique number. However, a different number system that guarantees the uniqueness can be adopted.

The controller 218 is constituted by a CPU, a ROM, a RAM, and the like. The controller 218 controls the elements ranging from the power receiver 210 to the host controller 219 in accordance with the operational program stored in the storage 217 to control the power receiving device 200. Representatively, electromotive force from the power receiver 210 generated by power transmission turns on the controller 218 so that the controller 218 starts to operate, and stopping the power transmission causes the electromotive force from the power receiver 210 to vanish so that the power receiver 210 is turned off, and ends the operation. However, a part of the operation can be continued by using electric power stored in the storage battery 213.

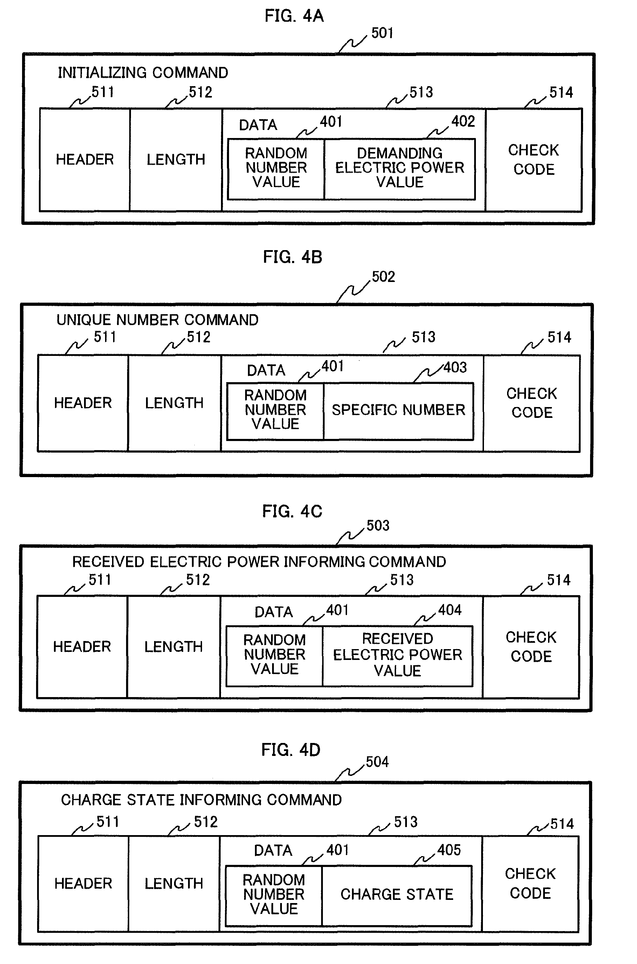

The controller 218 generates a control command to be used for controlling the operation of the power transmitting device 100. The controller 218 transmits the generated control command to the power transmitting device 100. The controller 218 controls the data transmitter 212 to modulate the control command by using the load modulation as a modulating method, for example, and encode the control command by using the Manchester code as an encoding method, for example, and to transmit, to the power transmitting device 100, a bit string generated by the encoding. FIGS. 4A to 4D illustrate format examples of the control command.

FIG. 4A illustrates the format example of an initializing command 501. The initializing command 501 is a command for initializing the power transmission. The power receiving device 200 starts to supply the electric power generated by the power transmission. When the controller 218 is thereby turned on, the initializing command 501 is immediately transmitted to the power transmitting device 100 only once.

The initializing command 501 is composed of a header 511, a length 512, data 513, and a check code 514, as illustrated in FIG. 4A. The header 511 stores a predetermined value that identifies the initializing command 501. The header 511 may comprise, at the head, a specific pattern (preamble) for making the power transmitting device 100 recognize start of the command, and giving the power transmitting device 100 a timing for synchronization. The length 512 stores a size of the initializing command 501. The data 513 is composed of the random number value 401 and the demanding electric power value 402. The random number value 401 is a random number value generated by the random number value generator 216 provided in the power receiving device 200. The random number value 401 is used for identifying a command transmitted from the different device, and switching a power receiving state of the power receiving device 200. The demanding electric power value 402 is a value indicating electric power necessary for charging the storage battery 213 provided in the power receiving device 200. The demanding electric power value 402 is stored in the initializing command as one of the data 513 to be communicated to the power transmitting device 100. The check code 514 is used for performing error detection when an error is generated on a communication path or the like. For example, exclusive-or of each byte of the header 511, the length 512, and the data 513 becomes the check code 514. Instead of exclusive-or, cyclic redundancy check CRC is used in another example.

FIG. 4B illustrates the format example of the specific number command 502. The specific number command 502 is a command for communicating, to the power transmitting device 100, the specific number 403 allocated to the power receiving device 200. The specific number command 502 is composed of a header 511, a length 512, data 513, and a check code 514, like the above-described initializing command 501. The header 511 stores a predetermined value identifying the specific number command 502. When a predetermined time period elapses after the power receiving device 200 transmits the above-described initializing command 501, the power receiving device 200 transmits the specific number command 502. The data 513 stores the random number value 401 and the specific number 403. The power receiving device 200 makes the random number value 401 stored in the initializing command 501 the same as the random number value 401 stored in the specific number command 502, as long as power transmission is continued, and the controller 210 is not turned off temporarily.

FIG. 4C illustrates the format example of the received electric power informing command 503. The received electric power informing command 503 is a command for communicating, to the power transmitting device 100, the average received electric power value 404 that is a value of electric power currently received by the power receiving device 200 by the power transmission. The received electric power informing command 503 is composed of a header 511, a length 512, data 513, and a check code 514, like the above-described initializing command 501. The header 511 stores a predetermined value identifying the received electric power informing command 503. The data 513 stores the random number value 401 and the received electric power value 404. After the power receiving device 200 transmits the above-described specific number command 502, the power receiving device 200 periodically transmits the received electric power informing command 503 to the power transmitting device 100. The power receiving device 200 makes the random number value 401 stored in the received electric power informing command 503 the same value as the random number value 401 stored in the initializing command 501, as long as the power transmission is continued, and the controller 210 is not turned off.

FIG. 4D illustrates the format example of the charge state informing command 504. The charge state informing command 504 is a command for communicating, to the power transmitting device 100, a present charge state of the storage battery 213 that is being charged by reception of electric power transmitted from the power transmitting device 100, the reception being performed by the power receiving device 200. The charge state informing command 504 is composed of a header 511, a length 512, data 513, and a check code 514, like the above-described initializing command 501. The header 511 stores a predetermined value identifying the charge state informing command 504. The data 513 stores the random number value 401 and the charge state 405. The charge state 405 stores indication of whether a charge process is completed or not, and stores a charged rate when charge is not completed. When some sort of error is generated in the charge process, the charge state 405 stores an error code corresponding to the generated error. After the power receiving device 200 transmits the above-described specific number command 502, the power receiving device 200 periodically transmits the charge state informing command 504 to the power transmitting device 100. The power receiving device 200 makes the random number value 401 stored in the charge state informing command 504 the same value as the random number value 401 stored in the initializing command 501, as long as the power transmission is continued, and the controller 210 is not turned off.

The above-described control command can be composed in a different format as long as the control command has the same function. For example, the initializing command 501 is combined with the specific number command 502 to transmit the demanding electric power value 402 and the specific number 403 by the common command. In another example, the received electric power informing command 503 may be combined with the charge state informing command 504 to transmit the received electric power value 404 and the charge state 405 by the common command.

Referring back to FIG. 1, the host controller 219 controls necessary functions for the power receiving device 200 through a process other than the charge process by the contactless power transmission. The host controller 219 operates by electric power supplied from the storage battery 213. For example, when the power receiving device 200 is a cellular phone, the host controller 219 embodies a telephonic communication function and a mail function. When the power receiving device 200 is a portable music player, the host controller 219 embodies a music reproducing function. The host controller 219 operates to thereby embody an arbitrary function possessed by the power receiving device 200, other than the charge process.

(Operation of Power Transmitting Device)

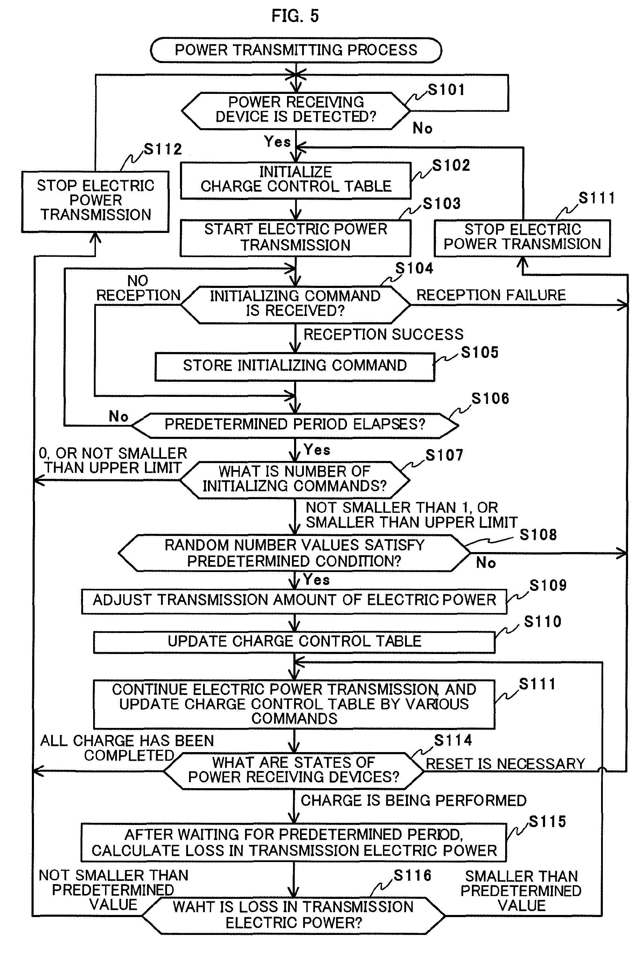

Next, the operation of the power transmitting device 100 is described. FIG. 5 is a flowchart for describing a power transmitting process performed by the power transmitting device 100. In the following, description is made with reference to the drawings.

When the power transmitting device 100 is turned on, the power transmitting device 200 urges a user to charge the power receiving device 200. Accordingly, the power receiving device 200 is placed on the power transmitting device 100 so that the power transmitting process is started.

The controller 117 controls the power receiving device detector 114 to detect the power receiving device 200 placed on the power transmitting device 100 (step S101).

When the power receiving device 200 is not detected (step S101; No), the controller 117 performs detection of the power receiving device 200 again (step S101) after the controller 117 waits for a predetermined period of time.

On the other hand, when the power receiving device 200 is detected (step S101; Yes), the controller 117 controls the storage 116 to initialize (clear all record in) a charge control table 300 (step S102). Then, the controller 117 controls the power transmitter 110 to start power transmission to the power receiving device 200 at a predetermined electric power (step S103).

Next, the controller 117 controls the data receiver 112 to detect whether or not the initializing command 501 transmitted from the power receiving device 200 is received (step S104).

When reception of the initializing command 501 succeeds (step S104; RECEPTION SUCCESS), the controller 117 controls the storage 116 to store the received initializing command 501 (step S105), and the process proceeds to the step S106.

When the initializing command 501 is not received (step S 104; NO RECEPTION), the process proceeds directly to the step S106.

When reception of the initializing command 501 fails (step S 104; RECEPTION FAILURE), the controller 117 controls the power transmitter 110 to stop power transmission to the power receiving device 200 (step S112). Then, the controller 117 controls the storage 116 to initialize the charge control table 300 (step S102). A cause of the failure in receiving the initializing command is considered to be transmission of a command different from the initializing command, the transmission being performed by the power receiving device 200. Further, a cause of the failure in receiving the initializing command is considered to be collision of received signals at the time of data reception since a plurality of the power receiving devices 200 placed on the power transmitting device 100 respectively transmit the initializing commands 501 at the same timing. In this case, the power receiving device 100 does not properly demodulate the initializing command 501, and a reception error occurs, or the power receiving device 100 receives wrong data. The reception of wrong data by the power receiving device 100 is detected by using the check code 514 attached to the command.

Next, the controller 117 determines whether or not a predetermined period of time elapses after the power transmission is started (step S106). The predetermined period of time is a period that is arbitrarily set in advance, such as the period set in advance by a user, a period set last time, or the like. This period is a waiting period for waiting for receiving the initializing commands 501 transmitted from the maximum number of the power receiving devices 200 that can be placed on the power transmitting device 100. This period is generated by shifting, from each other, the transmitting timings of the initializing commands 501 from the respective power receiving device 200 in a predetermined manner, for avoiding collision of received signals at the time of data reception.

When the predetermined period of time does not elapse after the power transmission is started (step S106; No), the process returns to the step S104, and the controller 117 redetermines whether or not the initializing command 501 is received.

On the other hand, when the predetermined period of time elapses after the power transmission is started (step S106; Yes), the controller 117 determines the number of the received initializing commands 501 (step S106).

When the number of the initializing commands 501 is zero, or equal to or larger than a predetermined upper limit (step S107; ZERO, OR NOT SMALLER THAN UPPER LIMIT), the controller 117 controls the power transmitter 110 to stop the power transmission (step S113). Then, the controller 117 redetects the power receiving devices 200 placed on the power transmitting device 100 (step S101). The reason for stopping the power transmission is that it is possible to determine that a foreign object other than proper power receiving devices 200 is placed on the power transmitting device 100 if the number of the initializing commands 501 is zero. Further, a reason for stopping the power transmission is that it is determined that the charge process is not guaranteed since the power receiving devices 200 of which number is equal to or larger than the specified number are placed on the power transmitting device 100 if the number of the initializing command 501 is equal to or larger than the predetermined upper limit. The predetermined upper limit is a value that can be set arbitrarily, such as a value of the number of the power receiving devices 200 that can be simultaneously charged by the power transmitting device 100, or a value that is set in advance by a user.

When the number of the initializing commands 501 is equal to or larger than one, and smaller than the predetermined upper limit (step S107; NOT SMALLER THAN 1, OR SMALLER THAN UPPER LIMIT), the controller 117 determines whether or not the random number value 401 included in each of the received initializing commands 501 satisfies a predetermined condition (step S108).

When all of the random number values 401 satisfy the predetermined condition (step S108; Yes), the controller 117 adjusts a transmission amount of electric power on the basis of the number of the initializing commands 501 (step S109). This process step is performed for the purpose of adjusting the predetermined electric power amount that is transmitted at the step S103, at the timing that the number of the initializing commands 501, that is, the number of the charging target power receiving device 200, is confirmed. This process step is omitted in another example. Next, the controller 117 controls the storage 116 to update the charge control table 300 such that the random number values 401 and the demanding electric power values 402 stored in the received initializing commands 501 are set (added) as new record (step S110).

On the other hand, when all of the random number values 401 do not satisfy the predetermined condition, that is, at least a part of the random number values 401 do not satisfy the predetermined condition (step S108; No), the controller 117 controls the power transmitter 110 to stop the power transmission to the power receiving devices 200 (step S112). Then, the controller 117 controls the storage 116 to initialize the charge control table 300 (step S102). In other words, the process returns to the step S102 to repeat the subsequent processes until all of the random numbers 401 included in the initializing commands 501 transmitted from the power receiving devices 200 satisfy the predetermined condition.

Power receiving efficiencies are made to correspond to the random number values. The predetermined condition for the random number values 401 is that the random number values 401 includes a random number value made to correspond to the power receiving efficiency, and includes at least one random number value corresponding to the power receiving efficiency other than the minimum power receiving efficiency. The power receiving efficiency will be described later.

A condition that all of the random number values are different from each other is further added to the predetermined condition in a different example. The condition that all of the random number values are different from each other is occasionally set by the following situation. There is a case where the initializing commands 501 are transmitted by shifting the transmitting timings of the initializing commands 501 from a plurality of the power receiving devices 200 to be different from each other such that the initializing commands 501 do not collide with each other at the power transmitting device 100 on the receiving side. When the transmitting timings are set in accordance with the random number values generated by the power receiving devices 200, the condition that all of the random number values are different from each other is added. Thereby, the above-described collision is securely avoided.

After performing the process at the step S110, the controller 117 continues the power transmission, receives, via the date receiver 112, the respective types of the commands from the power receiving devices 200, and updates the charge control table 300 on the basis of the received respective types of the commands (step S111). The updating at the step S111 does not change the random number values.

Next, the controller 117 confirms states of the power receiving devices 200 on the basis of the charge states 405 stored in the charge control table 300 (step S114).

When the charge states 405 of all of the power receiving devices 200 are "CHARGE IS COMPLETED" (step S114; ALL CHARGE IS COMPLETED), the controller 117 controls the power transmitter 110 to stop the power transmission (step S113). Then, after waiting for a predetermined period of time, the controller 117 detects the power receiving devices 200 again (step S101).

The controller 117 controls the power transmitter 110 to stop the power transmission to the power receiving devices 200 (step S112) in a case where the charge state 405 of the power receiving device 200 needs to be changed, in other words, in a case where the charge state 405 of the power receiving device 200 needs to be reset (step S114; RESET IS NECESSARY), examples of such a case including a case where the charge state 405 changes to indicate the state "charge is being performed" although the charge state 405 of the power receiving device 200 indicated the state "charge has been completed" and the charge of the power receiving device 200 had been already completed, and a case where the charge state 405 indicates the state "charge is stopped" although charge of the power receiving device 200 has not been completed. Then, the controller 117 controls the storage 116 to initialize the charge control table 300 (step S102). When the power transmission is resumed (step S103), each of the power receiving devices 200 generates the random number value 401, make the initializing command 501 include the generated random number value 401 to transmit the initializing command 501 to the power transmitting device 100, and change the power receiving efficiency of the receiver 210 in accordance with the random number value 401 stored in the initializing command 501. Details of operation of the power receiving device 200 are described later. The power transmitting device 100 determines whether or not the random number values 401 included in the received initializing commands 501 satisfy the predetermined condition for the random number values (step S108). When the predetermined condition is satisfied (step S108; Yes), the controller 117 adjusts transmitting electric power in accordance with the number of the initializing commands, that is, the number of the power receiving devices 200 (step S109). Then, the controller 117 updates the charge control table (step S110), and continues the power transmission to the power receiving devices 200 (step S111). At this time, the power receiving devices 200 receive the electric power at the power receiving efficiencies corresponding to the random number values 401. Accordingly, the above-described process enables the power transmitting device 100 to perform control on which power receiving device 200 among the power receiving devices 200 placed on the power transmitting device 100 should be a power transmission target, and on the amount of electric power that should be transmitted to the power transmission target. When ratios of electric power supplied to the respective power receiving devices 200 are desired to be changed, the predetermined condition for the random number values 401 is changed to be set, and the process of stopping the power transmission (step S112), and the process of starting the power transmission (step S103), and the process of receiving the initializing commands again (step S104) are repeated via the step S108 until the random number values 401 satisfy the predetermined condition. Thereby, in the power receiving devices 200, the random number values 401 allocated to the respective power receiving devices 200 are changed so that the charge state 405 of the power receiving devices 200 is changed.

The operation performed by the power transmitting device 100 for control of the power receiving process accompanied by the charge of a plurality of the power receiving devices 200 is described a little more in detail. To simultaneously charge a plurality of the power receiving devices 200, the power transmitting device 100 needs to transmit more electric power than in a case where one power receiving device 200 is placed. If the value of the maximum electric power that is transmitted by the power transmitting device 100 is smaller than a total value of electric power demanded by the respective power receiving devices 200, there is a possibility that received electric power is too small to simultaneously charge the respective power receiving devices 200. Meanwhile, even when the power transmitting device 100 possesses ability to transmit electric power equal to or larger than total electric power demanded by the respective power receiving devices 200, it is necessary to grasp how electric power is distributed to the power receiving devices 200, respectively, and to perform control so as to prevent excessive electric power from being supplied to one of the power receiving devices 200. For this reason, the power transmitting device 100 updates the charge control table 300 to change the charge states of the power receiving devices 200. In this example, as illustrated in FIG. 2, description is made for the case where the two power receiving devices 200a and 200b are placed on the power transmitting device 100. However, the same method is also applied in a case of three or more power receiving devices 200.

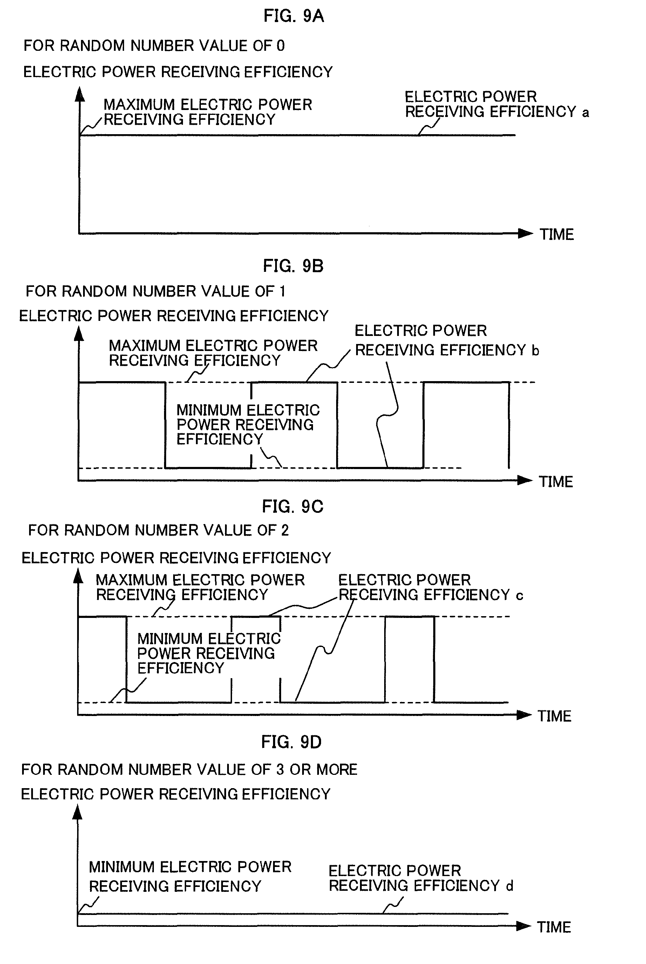

FIG. 3B illustrates one example of the charge control table 300 held by the power transmitting device 100 when the power transmitting device 100 is transmitting electric power to the two power receiving devices 200a and 200b. As illustrated in FIG. 3B, in the charge control table 300, the random number value 401 of the power receiving device 200a is "0", and the random number value 401 of the power receiving device 200b is "3". The respective power receiving devices 200a and 200b change the electric power receiving efficiencies in accordance with the random number values 401. FIGS. 9A to 9D described later exemplify relations between the random number value 401 and the electric power receiving efficiency. The power receiving efficiency is a ratio of electric power received by the power receiving device 200, to electric power transmitted by the power transmitting device 100. The maximum power receiving efficiency is set as the electric power receiving efficiency when the respective resonance frequencies of the power transmitter 110 and the power receiver 210 are the same, that is, when a resonating state occurs between the power transmitter 110 and the power receiver 210. The minimum power receiving efficiency is set as the power receiving efficiency when the respective resonance frequencies of the power transmitter 110 and the power receiver 210 are completely different from each other, and a non-resonating state (for example, a frequency difference between resonating peaks representing the respective resonating characteristics is equal to or larger than a value that is k times the standard deviation of each of the respective resonating peaks where k is equal to or larger than four) occurs between the power transmitter 110 and the power receiver 210. It is assumed that the random number value 401 of "0" is made to correspond the pattern in which the maximum electric power receiving efficiency continues as illustrated in FIG. 9A, and the random number value 401 of "3" is made to correspond the pattern in which the minimum electric power receiving efficiency continues as illustrated in FIG. 9D. In the example illustrated in FIG. 3B, the power receiving device 200a continues to receive the electric power at the maximum electric power receiving efficiency, and the power receiving device 200b continues to receive the electric power at the minimum electric power receiving efficiency to thereby receive almost no electric power. Accordingly, the received electric power value 404 of the power receiving device 200a becomes a value close to the demanding electric power value, and the charge state indicates the state "charge is being performed". Meanwhile, the received electric power value 404 of the power receiving device 200b becomes too small to perform charge, so that the charge state indicates the state "charge is stopped". Setting such combination of the random number values 401 makes it possible to charge the power receiving device 200a only, prior to the power receiving device 200b.

In one example of the charge control table 300 illustrated in FIG. 3C, the random number value 401 of the power receiving device 200a is "0", and the random number value 401 of the power receiving device 200b is "1". FIG. 9B illustrates an example of the electric power receiving efficiency when the random number value 401 is "1". In this example, the electric power receiving efficiency periodically changes between the maximum electric power receiving efficiency and the minimum electric power receiving efficiency. Accordingly, a time average of the received electric power value in the power receiving device 200 when the random number value 401 is "1" is smaller than in the case where the random number value 401 is "0", and larger than in the case where the random number value 401 is "3". While the respective charge states stored in the charge control table 300 illustrated in FIG. 3C indicate the state "charge is being performed", a charging speed of the power receiving device 200a is faster and the power receiving device 200b is more slowly charged since the received electric power value 404 of the power receiving device 200a is larger than the received electric power value 404 of the power receiving device 200b. Thus, combining the random number values 401 generated by the respective power receiving devices 200a and 200b enables the electric power receiving efficiencies of the respective power receiving devices 200a and 200b to be changed.

The combination of the random number values 401 exemplified in FIG. 3C is obtained by adding, to the predetermined condition concerning the step S 108 in FIG. 5, the condition that the random number values 401 include the value corresponding to the maximum electric power receiving efficiency, for example.

The controller 117 of the power transmitting device 100 refers to the charge control table 300 to grasp how electric power is distributed to the power receiving devices 200a and 200b. When electric power is not properly distributed to the respective power receiving devices (step S114; RESET IS NECESSARY), the controller 117 stops the power transmission once (step S112), initializes the charge control table 300 (step S102), and then, resumes the power transmission (step S103). The power receiving devices 200a and 200b generate the random number values 401 again by resuming the power transmission, and store the generated random number values 401 in the initializing commands 501 to transmit the initializing commands 501 to the power transmitting device 100. The power transmitting device 100 receives the initializing commands 501 and other commands from the power receiving devices 200a and 200b (steps including step S104) to additionally generate or update the charge control table 300 (step S111). The power transmitting device 100 repeats the steps S 102 to S113 following the step S 112 until the transmitted electric power comes to be properly distributed to the power receiving devices 200a and 200b.

Next, description is made about operation when the charge of one of the power receiving devices 200 is completed in a case where the power transmitting device 100 charges a plurality of the power receiving devices 200. In a case where only one power receiving device 200 is placed on the power transmitting device 100, the power transmitting device 100 receives the charge state informing command 504 (step S111), when the power transmitting device 100 confirms that the charge of the power receiving device 200 is completed on the basis of the charge state 405 stored in the charge state informing command 504 (step S114), the power transmitting device 100 is required only to stop the power transmission (step S 113). However, in a case where a plurality of the power receiving devices 200 are placed on the power transmitting device 100, even when the charge of one of the power receiving devices 200 is completed, the charge process of the other power receiving devices 200 for which the charge is not completed needs to be performed. As illustrated in FIG. 2, this description exemplifies the case where the two power receiving devices 200a and 200b are placed on the power transmitting device 100. However, the same method can be applied to a case of three or more power receiving devices 200.

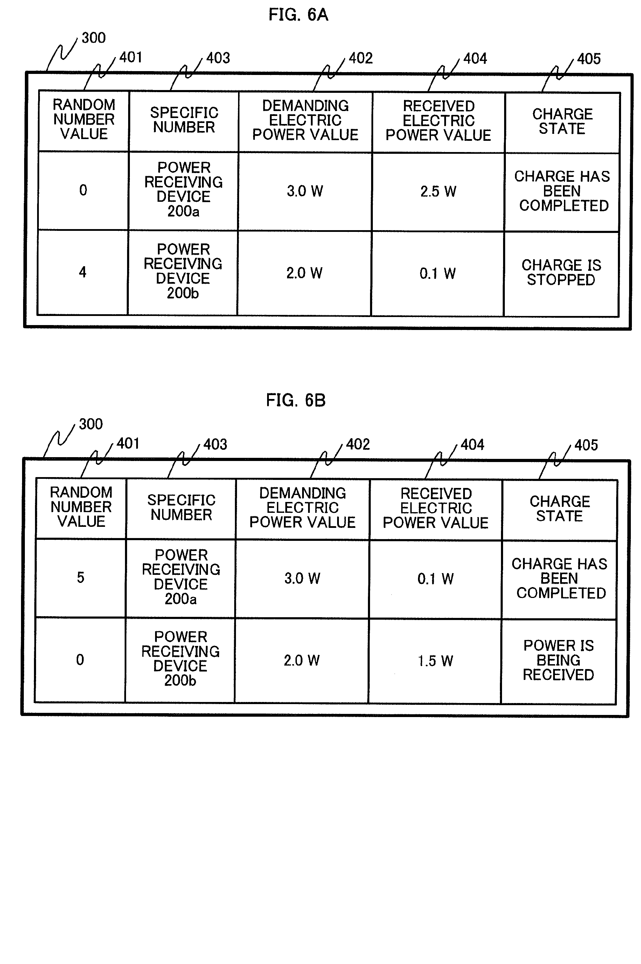

In the example of the charge control table 300 illustrated in FIG. 6A, the random number value 401 of the power receiving device 200a is "0", and the random number value 401 of the power receiving device 200b is "4". The power receiving device 200a receives electric power at the maximum electric power receiving efficiency. However, the charge state of the power receiving device 200a indicates the state "charge has been completed". Meanwhile, the power receiving device 200b receives electric power at the minimum electric power receiving efficiency, that is, in a state where the electric power receiving efficiency is continuously low. Accordingly, the power receiving device 200b does not substantially receive electric power, and the charge state of the power receiving device 200b indicates the state "charge is stopped". Then, the controller 117 adds, to the predetermined condition for the random number values 401, the condition that the random number value 401 of the power receiving device 200a for which charge has been completed is set as a value equal to or larger than "3". In this situation, the power transmitting device 100 temporarily stops the power transmission, and resumes the power transmission. By the stop of the power transmission, the power transmitting device 100 resets the charge process between the power transmitting device 100 and the power receiving devices 200a and 200b, that is, the power receiving process. Meanwhile, by resuming the power transmission, the power receiving devices 200a and 200b updates the respective random number values 401. It is assumed that as a result of this, the charge control table 300 comes to be in a set state illustrated in FIG. 6B. In FIG. 6B, the random number value 401 of the power receiving device 200a is "5" (that is, equal to or more than "3 "), and the power receiving device 200a continues to receive electric power at the minimum electric power receiving efficiency as illustrated in FIG. 9D. Meanwhile, the random number value 401 of the power receiving device 200b is "0", and the power receiving device 200b continues to receive the electric power at the maximum electric power receiving efficiency. Accordingly, the charge state of the power receiving device 200b has changed to indicate the state "charge is being performed". If the power transmitting device 100 performs the power transmission reset of temporarily stopping the power transmission, initializing the charge control table, and then resuming the power transmission, and as a result of the power transmission reset, if the charge control table 300 is not set to indicate a desirable state such as the state illustrated in FIG. 6B, the power transmitting device 100 repeats the power transmission reset until the charge control table 300 is set to indicate a desirable state.

The charge state 405 of the power receiving device 200 indicates the state "charge is being performed" (step S 114; CHARGE IS BEING PERFORMED), the controller 117 waits for a predetermined period of time, and then, calculates loss of the transmission electric power (step S115). The controller 117 calculates a difference electric power value that is a difference between transmission electric power value measured by the transmission power detector 111 and a total of the received electric power values 404 that concerns at least one power receiving device 200 and that are stored in the received electric power informing commands 503 received from the power receiving devices 200 placed on the power transmitting device 100. The difference electric power value corresponds to the loss of the transmission electric power. Usually, the difference electric power value corresponds to a radiated electromagnetic wave or heat absorbed in the power transmitting device 100 and the power receiving device 200. However, when the difference electric power value (loss of the transmission electric power) is too large, a metal object placed on the power transmitting device 100, or a foreign object (for example, a contactless IC card or RFID tag) resonating at the same resonant frequency possibly absorbs the energy corresponding to the loss. For this reason, the controller 117 determines whether or not the loss of the transmission electric power is equal to or larger than a predetermined value (step S116). Thereby, it is determined whether or not a foreign object exists on the power transmitting device 100. The predetermined value is set as an arbitrary value in an example.

When the loss of the transmission electric power is equal to or larger than the predetermined value (step S 116; Yes), the controller 117 controls the power transmitter 110 to stop the power transmission (step S113), and waits for a predetermined period of time, and then, detects the power receiving device 200 via the power receiving device detector 114 again (step S101). Alternatively, when the loss of the transmission electric power is equal to or larger than the predetermined value, the power transmission is stopped (step S113), and then, warning is made to a user since it is considered that a foreign object exists on the power transmitting device 100.

Meanwhile, when the loss of the transmission electric power is smaller than the predetermined value (step S116; No), the controller 117 continues the power transmission, and updates the charge control table 300 on the basis of the respective types of received commands (step S111).

By the above-described process, the power transmitting device 100 properly controls the power transmission to the power receiving device 200 even in the one way communication from the power receiving device 200 to the power transmitting device 100 at the time of performing the contactless power transmission. The one-way communication enables electric power reception of the power receiving device 200 to be controlled. For this reason, the device is simplified, and cost is reduced.

(Operation of Power Receiving Device)

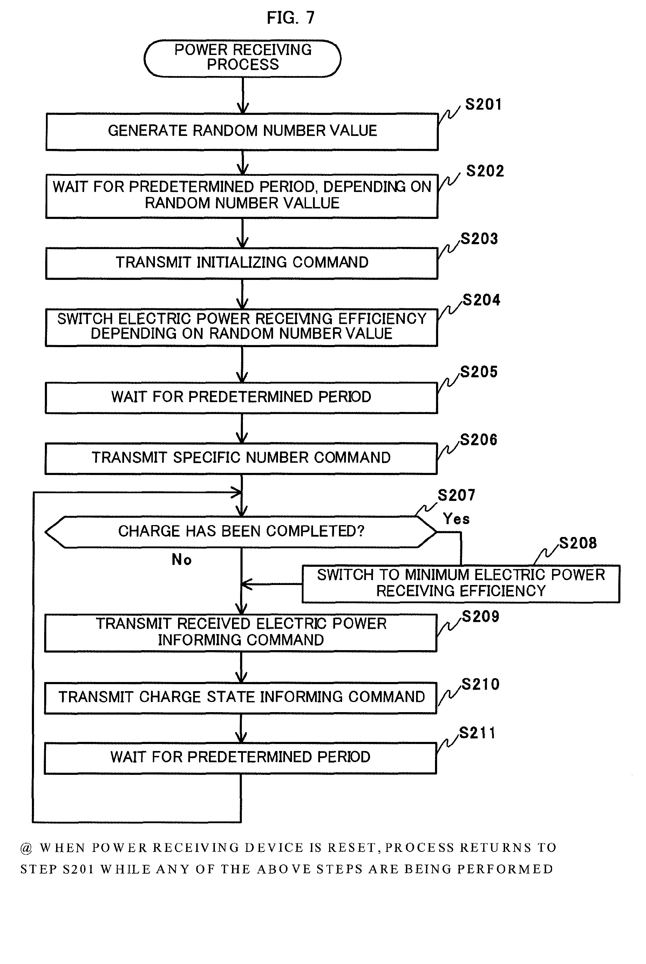

Next, the operation of the power receiving device 200 will be described. FIG. 7 is a flowchart for illustrating a charge process performed by the power receiving device 200. In the following, description will be made with reference to the drawings.

The power receiving device 200 urges a user to charge the power receiving device 200. Thereby, the power receiving device 200 is placed on the power transmitting device 100 so that the power receiving device 200 starts the charge process. In this situation, the resonant frequency of the power receiver 210 is set as a predetermined value in advance. In other words, the electric power reception is started at the predetermined electric power receiving efficiency. Usually, the efficiency is set as the maximum electric power receiving efficiency. When reset to the power receiving device 200 is generated, the process is started from the first step in the flowchart, whichever step process is being performed at time of the reset generation. The first step is the step S201.

First, the power receiver 210 receives electric power by power transmission from the power transmitting device 100, and then the controller 218 controls the random number value generator 216 to generate the random number value 401 (step S201). In a case where the power transmitting device 100 temporarily stops the power transmission, and then resumes the power transmission, the electric power supply to the controller 218 is stopped temporarily, and is then resumed. Accordingly, whichever step process illustrated in FIG. 7 the controller 218 is performing, the controller 218 starts the process from the step S201, and controls the random number value generator 216 again to generate the random number value 401.

Next, the controller 218 waits for a predetermined period of time depending on the generated random number value 401 (step S202). For example, the controller 218 waits for the period of time proportional to the random number value 401. The controller 218 performs the process of the step S202 before transmission of the initializing command 501 at the step S203 described later. The reason of this is that the transmission data collide with each other if a plurality of the power receiving devices 200 are placed on the power transmitting device 100, and simultaneously transmit the initializing commands 501 after receiving the electric power. For this reason, in the process of the step S202, the controller 218 waits for the period depending on the generated random number value 401, and then transmit the initializing command 501 so that the collision is prevented. However, the predetermined period at the process of the step S202 does not need to be the period depending on the random number value 401.

Next, the controller 218 controls the data transmitter 212, to transmit to the power transmitting device 100, the initializing command 501 that stores the generated random number value 401 (step S203).

Next, the controller 218 controls the power receiver 210 to change the electric power receiving efficiency on the basis of the random number value 401 (step S204), and waits for a predetermined period of time (step S205).

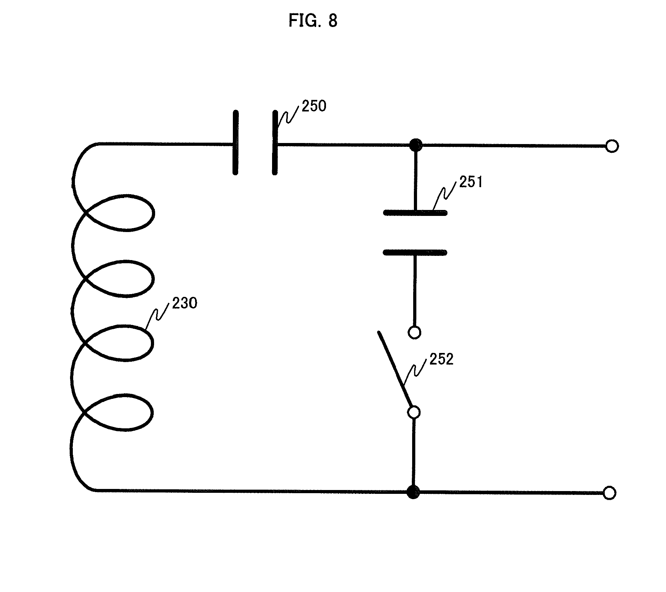

A method of changing the electric power receiving efficiency will now be described. FIG. 8 illustrates a part of a resonating circuit of the power receiver 210 provided in the power receiving device 200. A secondary coil 230 is connected in series to a capacitor 250, and is connected in parallel with the capacitor 251. The capacitor 251 is connected to a switch 252. The switch 252 is switched to be turned on or off by control of the controller 218. It is assumed that in a state where the switch 252 is turned off, a frequency of an AC power generated by the power transmitter 110 provided in the power transmitting device 100, that is, a power transmitting side resonant frequency is equal to a resonant frequency of the resonating circuit provided in the power receiver 210, that is, a power receiving side resonant frequency. In this situation, the electric power receiving efficiency becomes maximum, and this efficiency is accordingly called the maximum electric power receiving efficiency. Meanwhile, when the switch 252 is turned on, a capacity of the capacitor 251 is added to change the power receiving side resonant frequency. Thereby, the power receiving side resonant frequency becomes a different frequency resulting in a state where the power to be received does not resonate with the AC power generated by the power transmitter 110. For example, the difference between the power transmitting side resonant frequency and the power receiving side resonant frequency is a value obtained by multiplying a value of k and the standard deviation of the resonating peak that occurs as the resonating characteristic, where the value of k is, for example, "4" or more. In such a non-resonating state, the electric power receiving efficiency becomes a value close to the minimum, and this efficiency is accordingly called the minimum electric power receiving efficiency for convenience of the description. In this manner, the power receiving device 200 greatly reduces the electric power receiving efficiency. In other words, the power receiving device 200 thus controls the power receiving side resonant frequency on the basis of the random number value 401, and thereby changes the electric power receiving efficiency for electric power received by the power transmission.

In the above description, there are two types of electric power receiving efficiency, which are the maximum electric power receiving efficiency and the minimum electric power receiving efficiency. In order to set the electric power receiving efficiency to be a value between these two efficiencies, time period for switching of the switch 252 is controlled so that period distribution for the maximum electric power receiving efficiency and the minimum electric power receiving efficiency is changed. Changing the period distribution enables an effective electric power receiving efficiency, that is, a time average of the electric power receiving efficiency to be controlled. In this case, the random number value 401 is made to correspond to the electric power receiving efficiency, and the electric power receiving efficiency as the effective electric power receiving efficiency is made to correspond to the period distribution for switching the switch 252, that is, time change in the electric power receiving efficiency. FIGS. 9A to 9D illustrate examples of the corresponding relation between the random number value and the electric power receiving efficiency. The electric power receiving efficiency is controlled by period distribution that concerns switching of the switch 252 and which is made to correspond to the random number value FIGS. 9A to 9D show time change in the electric power receiving efficiencies corresponding to the cases of the random number values 401 of "0", "1 ", "2" and "3 or more", respectively. FIG. 9A corresponds to a state where the switch 252 is held off. In this state, the electric power receiving efficiency continues to be the maximum electric power receiving efficiency. FIG. 9D corresponds to a state where the switch 252 is held on. In this state, the electric power receiving efficiency continues to be the minimum electric power receiving efficiency. FIGS. 9B and 9C illustrate different period distribution for an on state and an off state of the switch 252, and the respective period distribution depends on the random number values 401 of "1" and "2". The period ratio of the state where the switch 252 is turned off when the random number value 401 is "1" is larger than the period ratio of the state where the switch 252 is turned off when the random number value 401 is "2". Accordingly, the period of maintaining the maximum electric power receiving efficiency, and the period of maintaining the minimum electric power receiving efficiency differ from each other as illustrated in FIGS. 9B and 9C. The effective electric power receiving efficiency that is the time average in the case of the random number value 401 of "1" is larger than that in the case of the random number value 401 of "2". By this method, the effective electric power receiving efficiency is controlled by the random number value 401.

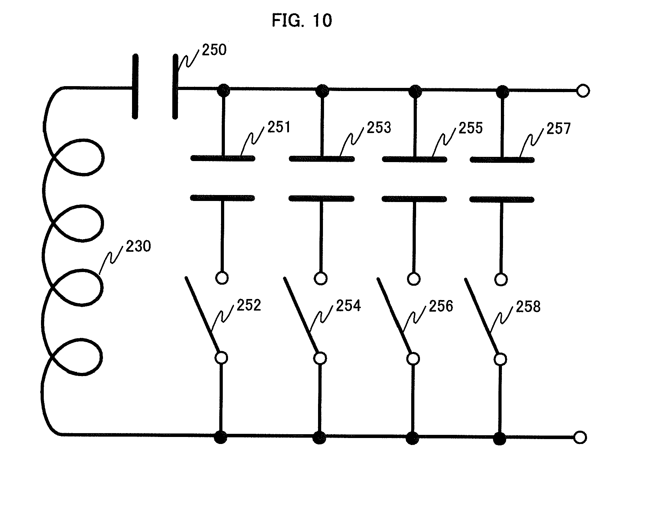

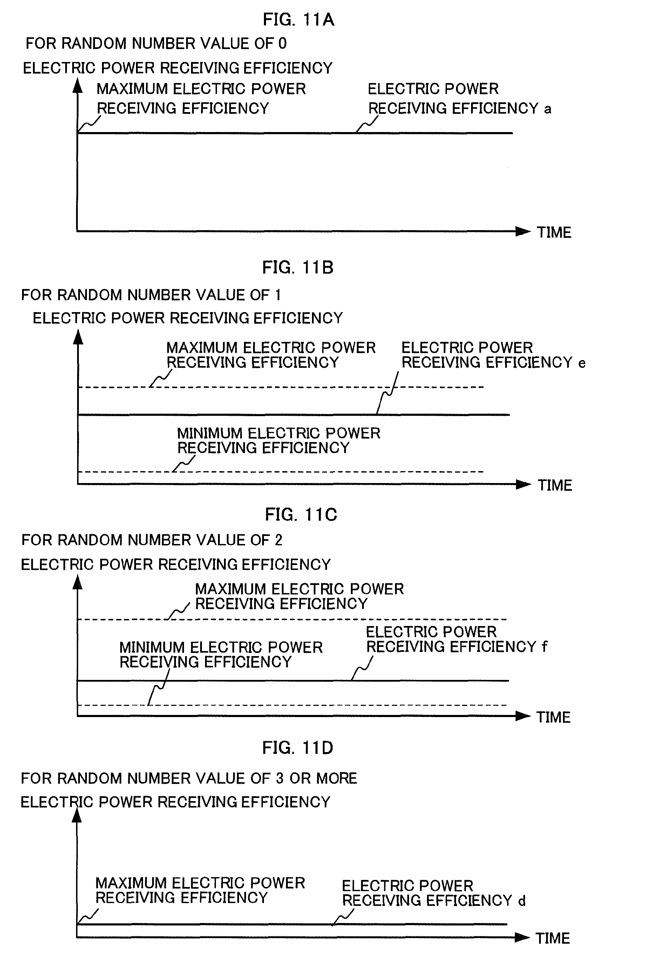

Another method of changing the electric power receiving efficiency will be described. In this method, a resonating circuit illustrated in FIG. 10 is used. In the resonating circuit illustrated in FIG. 10, in addition to the capacitor 251 and the switch 252, capacitors and switches connected in parallel with the coil 220 and capacitor 250 are provided. In FIG. 10, the capacitor 253 and the switch 254, the capacitor 255 and the switch 256, and the capacitor 257 and the switch 258 are connected in parallel with each other. A plurality of the different  resonant frequencies are set by changing selection of one or more switches to be opened, and selection of one or more switches to be closed. In this manner, a degree of a difference in the resonant frequency between the power transmitting side and the power receiving side is made possible to be set as a value smaller than k times the standard deviation of the resonating peak. Thereby, the electric power receiving efficiency is switched to be one of three or more different electric power receiving efficiencies, that is, the maximum electric power receiving efficiency, the minimum electric power receiving efficiency, and one or more electric power receiving efficiencies between the maximum and minimum electric power receiving efficiencies. FIGS. 11A to 11D illustrate examples of the corresponding relation between the random number value 401 and the electric power receiving efficiency in this case. FIGS. 11A to 11D show the electric power receiving efficiencies corresponding to the cases of the random number values 401 of "0", "1", "2" and "3 or more", respectively. Magnitude relation of the electric power receiving efficiencies illustrated in the drawing is: the maximum electric power receiving efficiency = the electric power receiving efficiency a > the electric power receiving efficiency e > the electric power receiving efficiency f > the electric power receiving efficiency d > the electric power receiving efficiency d = the minimum electric power receiving efficiency.

In an example, setting is made so that the frequency of the AC current generated by the power transmitter 110, and the resonant frequency of the power receiving device are the same in a state where the switch 252 is turned on, and are completely different from each other in a state where the switch 252 is turned off. The same applies to a case where a plural sets of the capacitor and the switch are connected in parallel with the coil 220 and the capacitor 250. In an example, a coil other than the coil 230 is connected in series to each of the switches. As long as the resonant frequency of the resonating circuit is changed to change the electric power receiving efficiency, another arbitrary circuit configuration is adopted in an example.

In the examples described by referring to FIGS. 9A to 9D, when the random number value 401 is "0", the electric power continues to be received without lowering the electric power receiving efficiency. However, this is made to correspond to a different arbitrary value instead of the value "0" of the random number value 401 in another example. Further, in an example, when the random number value 401 is smaller than a predetermined value, the electric power receiving efficiency is controlled as illustrated in FIG. 9A, In another example, when the random number value 401 is equal to or larger than a predetermined value, the electric power receiving efficiency is controlled as illustrated in FIG. 9A, and when the random number value 401 is smaller than a predetermined value, control of continuously making the electric power receiving efficiency low to steadily making the received electric power small is performed as illustrated in FIG. 9D. In still another example, when the random number 401 is an even number, the electric power receiving efficiency is controlled as illustrated in FIG. 9A, and when the random number 401 is an odd number, the electric power receiving efficiency is controlled as illustrated in FIG. 9D. Corresponding relation between the random number value 401 and the electric power receiving efficiency can be arbitrarily set. This applies to the case of FIGS. 11A to 11D, as well.

Next, the controller 218 transmits the specific number command 502 stored in the random number value 401 to the power transmitting device 100 (step S206).

Next, the controller 218 controls the charge manager 214 to determine whether or not the charge of the storage battery 213 is completed (step S207).

When the charge of the storage battery 213 is completed (step S207; Yes), the controller 218 controls the power receiver 210 to switch the electric power receiving efficiency to be the minimum electric power receiving efficiency (step S208). By switching the electric power receiving efficiency to the minimum electric power receiving efficiency, the power receiving device 200 is controlled so as not to receive unnecessary electric power. This is accomplished as follows. The random number value of the power receiving device 200 of which charge has been completed is automatically set as the random number value corresponding to the minimum electric power receiving efficiency. Meanwhile, when the charge of the storage battery 213 is not completed (step S207; No), the process proceeds to the next step S209.

Next, the controller 218 controls the data transmitter 212 to transmit, to the power transmitting device 100, the received electric power informing command 503 storing the generated random number value 401 (step S209).

Next, the controller 218 transmits, to the power transmitting device 100, the charge state informing command 504 storing the generated random number value 401 (step 210). Then, after the controller 218 waits for a predetermined period of time (step S211), the controller 218 controls the charge manager 214 to redetermine whether or not the charge of the storage battery 213 is completed (step S207). In an example, the controller 218 transmits either one of the received electric power informing command 503 and the charge state informing command 504 prior to one another.

By repeating the above-described process, the power receiving device 200 is charged. A user moves the power receiving device 200 away from the position on the power transmitting device 100 by a predetermined distance or more so that the charge is ended.

By the above-described process, the one way communication from the power receiving device to the power transmitting device enables the proper power transmission control in the case of the contactless power transmission. The one way communication enables the electric power reception of the power receiving device to be controlled. Thereby, the device is simplified, and the cost is reduced.

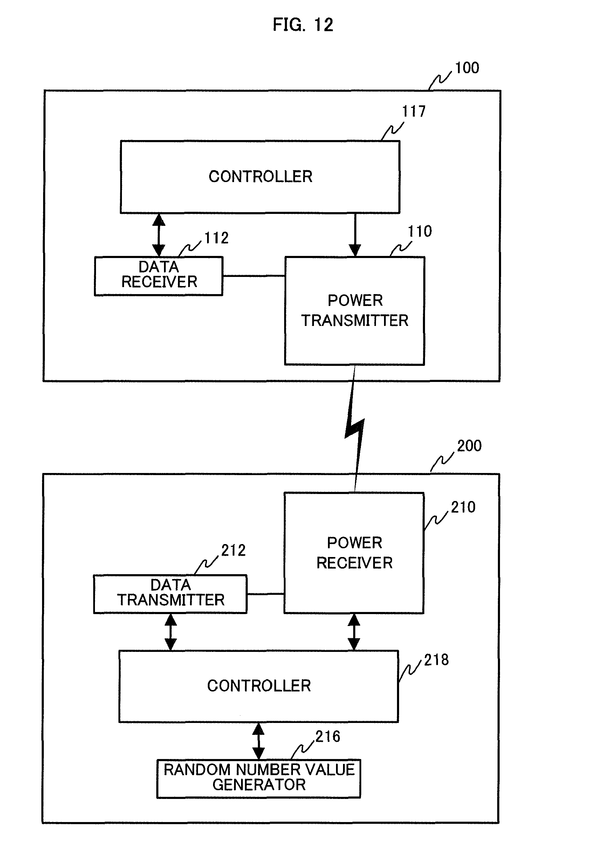

FIG. 12 illustrates simplified configurations of the power transmitting device 100 and the power receiving device 200 according to the present embodiment 1. Description of the constituent elements having the same reference numerals as those in FIG. 1 is the same as the description on FIG. 1.

The simplified power transmitting device 100 is a power transmitting device that transmits electric power to at least one power receiving device 200 by using a resonating phenomenon in a contactless manner. The power transmitting device 100 comprises the power transmitter 110, the data receiver 112, and the controller 117. The power transmitter 110 transmits electric power to the power receiving device 200 by using a resonating phenomenon in a contactless manner at the resonant frequency having the predetermined relation with the resonant frequency of the power receiver 210 that is provided in the power receiving device 200 and that receives the electric power. The power supply 113 illustrated in FIG. 1 is omitted in FIG. 12, and is included in the power transmitter 110 in an example. After the power transmitter 110 starts transmission of the electric power, that is, after the power receiving device 200 starts reception of the electric power, the data transmitter 112 receives the command including the random number value from the power receiving device 200. This random number value is generated each time the power receiving device 200 newly starts reception of the electric power. The random number value represents the electric power receiving state of the power receiving device 200. The controller 117 determines whether or not all of the random number values included in the commands received from one or more power receiving devices 200 satisfy the above-described predetermined condition. When the condition is satisfied, the controller 117 continues the electric power transmission to the power receiving device 200, via the power transmitter 110. When the condition is not satisfied, the controller 117 temporarily stops the electric power transmission to the power receiving device 200, via the power transmitter 110, and then resumes the electric power transmission. Subsequently, the controller 117 performs, via the data receiver 112, the control of receiving the commands including the new random number values from the power receiving devices 200. Until the new random number values satisfy the predetermined condition, the controller 117 performs the control of repeating the stop and the subsequent resuming of the electric power transmission, and the further reception of the commands including the new random number values via the date receiver 112, as described above. The operation is the same as that described by referring to FIG. 5. Accordingly, the description of the operation is omitted.

This power transmitting device 100 performs the process illustrated in FIG. 5 to thereby properly control the electric power transmission to the power receiving device 200 with the one way communication from the power receiving device 200 to the power transmitting device 100 in the case of performing the contactless power transmission. Further, by the one way communication, the electric power reception of the power receiving device 200 is controlled. Accordingly, the device is simplified, and the cost is reduced.

The simplified power receiving device 200 is a power receiving device that receives electric power in a contactless manner from the power transmitting device transmitting the electric power. The simplified power receiving device 200 stores information in which the random number value and the electric power receiving efficiency correspond to each other, and comprises the power receiver 210, the data transmitter 212, the random number value generator 216, and the controller 218. The power receiver 210 has the variable resonant frequency that can be changed to the same frequency as the power transmitting side resonant frequency. The power transmitting side resonant frequency is the resonant frequency of the power transmitter 110 that is provided in the power transmitting device 100 and that transmits the electric power. The power receiver 210 receives the electric power transmitted from the power transmitting device 100 at the power receiving side resonant frequency that is the resonant frequency set within a variable range of the variable resonant frequency. The random number value generator 216 generates the random number value. The data transmitter 212 transmits, to the power transmitting device 100, the commands including the random number value. The electric power transmission from the power transmitting device 100 is started so that the controller 218 performs the control of starting to receive the electric power at the resonant frequency set in advance, generating the random number value via the random number generator 216 each time the reception of the electric power is started, generating the commands including the random number value, and transmitting the generated commands to the power transmitting device 100 via the data transmitter 212. Further, the controller 218 controls the power receiving side resonant frequency within the variable range of the variable resonant frequency on the basis of the electric power receiving efficiency corresponding to the generated random number value. Thereby, the controller 218 performs the control of continuing electric power reception by the power receiver 210. The operation is the same as that described by referring to FIG. 7. Accordingly, the description of the operation is omitted.

The power receiving device 200 performs the process illustrated in FIG. 7 to thereby perform the proper power transmission control even in the one way communication from the power receiving device 200 to the power transmitting device 100 when the contactless power transmission is performed. Further, by the one way communication, the electric power reception of the power receiving device 200 is controlled. Accordingly, the device is simplified, and the cost is reduced.

(Embodiment 2)

In the above-described case, according to the power transmitting device 100 and the power receiving device 200 of the embodiment 1, when the power receiving device 200 does not receive a desired electric power, the power transmitting device 100 stops the electric power transmission, and updates the random number value 401 so that the received electric power value 404 received by the power receiving device 200 is changed. In the below-described case, according to the embodiment 2, priority for causing the predetermined power receiving device 200 to be preferentially charged is set, and the received electric power value 404 received by the power receiving device 200 having the high priority is changed. Description about the same configuration and the operation as the power transmitting device 100 and the power receiving device 200 of the embodiment 1 is appropriately omitted.

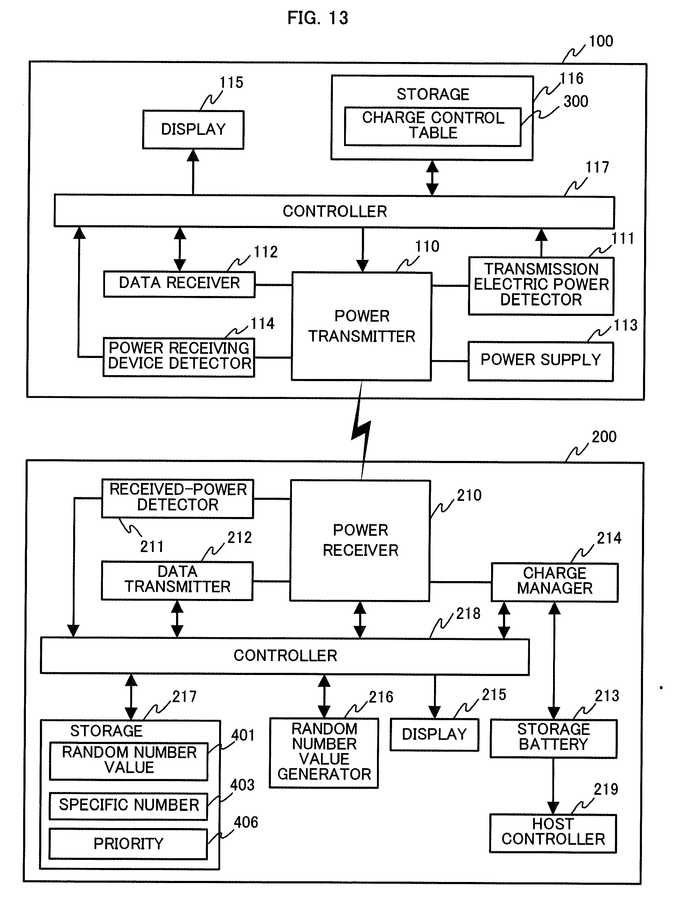

FIG. 13 illustrates a contactless power transmitting system constituted by the power transmitting device 100 and the power receiving device 200 according to the embodiment 2 of the present invention. The power transmitting device 100 and the power receiving device 200 according to the embodiment 2 has the same configurations as the power transmitting device 100 and the power receiving device 200 according to the embodiment 1. The power transmitting device 100 according to the embodiment 2 operates in accordance with the flow of the power transmission process illustrated in FIG. 5 like the power transmitting device 100 according to the embodiment 1. The power receiving device 200 according to the embodiment 2 operates in accordance with the flow of the power receiving process illustrated in FIG. 7 like the power receiving device 200 according to the embodiment 1. As for the point which differs from the case of the embodiment 1, the charge control table 300 stored by the storage 116 provided in the power transmitting device 100 contains the priority 406. Further, the storage 217 provided in the power receiving device 200 stores the priority 406. The priority 406 represents the priority of the charge processes of charging the respective power receiving devices 200 when the respective power receiving devices 200 are placed on the power transmitting device 100. The priority 406 is used by the power transmitting device 100 for determining which power receiving device 200 is preferentially charged. For example, the priority 406 takes a value within the range from a value "0" to a value "100", and the priority having a value closer to a value "100" is higher. In another example, the value of the priority is defined in a different way. A user freely sets a value of the priority 406 in another example. For example, it is considered that the priority 406 is set to be high for the power receiving device 200 that is a smartphone used every day, and the priority 406 is set to be low for the power receiving device 200 that is a digital camera not used often.

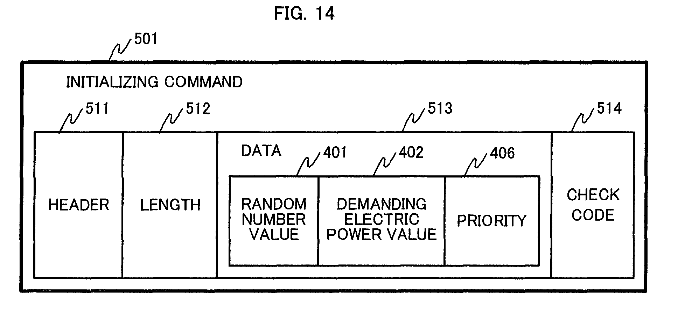

As a method in which the power receiving device 200 informs the power transmitting device 100 of the priority 406, it is considered that the priority 406 is stored in a part of the data 513 of the initializing command 501 as illustrated in FIG. 14, and the command 501 is transmitted to the power transmitting device 100. The controller 218 controls the data transmitter 212 to modulate and encode the initializing command 501 storing the priority 406, and to transmit the modulated and encoded initializing command 501 to the transmitting device 100. The power receiving device 200 informs the power transmitting device 100 of the priority 406 in an arbitrary method.

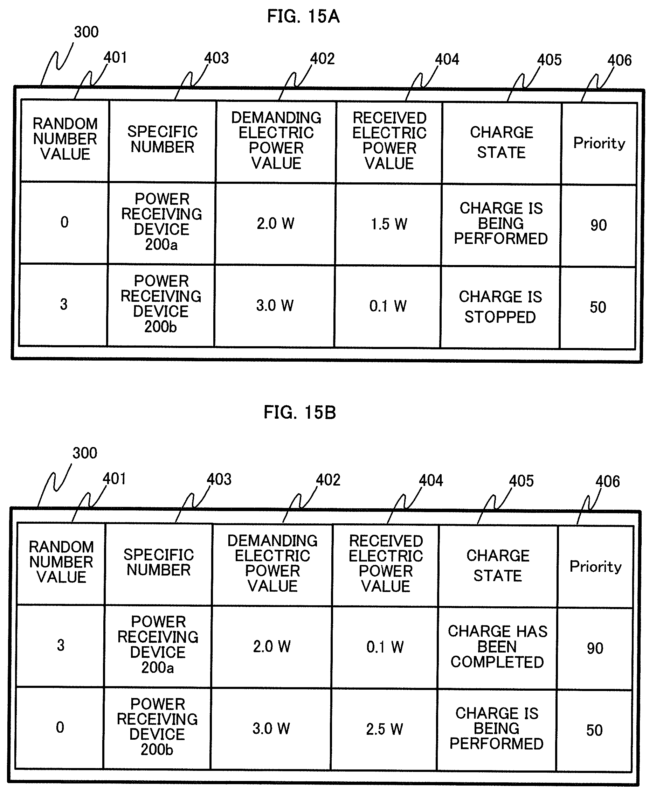

When the power transmitting device 100 receives the initializing command 501 including the priority 406, the power transmitting device 100 stores the priority 406 in the charge control table 300 as illustrated in FIGS. 15A and 15B, and manages the priority 406. Thereby, the power transmitting device 100 compares the priority 406 of the respective power receiving devices 200 to select the power receiving device 200 that should be preferentially charged so that the preferential charge process is performed. In an example illustrated in FIG. 15A, the priority 406 of the power receiving device 200a is higher than the priority 406 of the power receiving device 200b. For this reason, a value "0" is allocated to the random number value 401 of the power receiving device 200a for example, so that the power receiving device 200a is charged without reducing the electric power receiving efficiency. Meanwhile, a value "3" is allocated to the random number value 401 of the power receiving device 200b so that the electric power receiving efficiency is reduced. Accordingly, charge of the power receiving device 200b is in a stopped state. In an example illustrated in FIG. 15B, although the power receiving device 200a has the priority higher than the priority of the power receiving device 200b, charge of the power receiving device 200a has been completed. Accordingly, a value "0" is allocated to the random number value 401 of the power receiving device 200b so that the charge process is being performed for the power receiving device 200b.

The power receiving device 200 according to the embodiment 2 sets the priority 406, and causes the set priority 406 to be included in the initializing command that is transmitted to the power transmitting device 100. The power transmitting device 100 that has received this initializing command adds, to the predetermined condition for the random number value 401, the condition that the random number value 401 corresponds to the priority 406. Except for these two points, the power transmitting device 100 performs the same process as the process described by referring to FIG. 5, and the power receiving device 200 performs the same process as the process described by referring to FIG. 7. The random number value 401 corresponding to the priority 406 is generated, accompanying the reset process of resuming the electric power transmission after the electric power transmission is stopped temporarily, as described above in the embodiment 1.

Thus, the power transmitting device 100 manages the priority 406 in addition to the charge state 405 of the power receiving device 200 in the charge control table 300. Thereby, the power transmitting device 100 controls the electric power transmission more finely.

(Embodiment 3)

According to the embodiment 3, the random number value 401 is not generated by the same process each time, and under certain condition, the random number value 401 to be used is determined by the random number value 401 used last time, on the basis of a predetermined calculating formula. The certain condition will be described later.

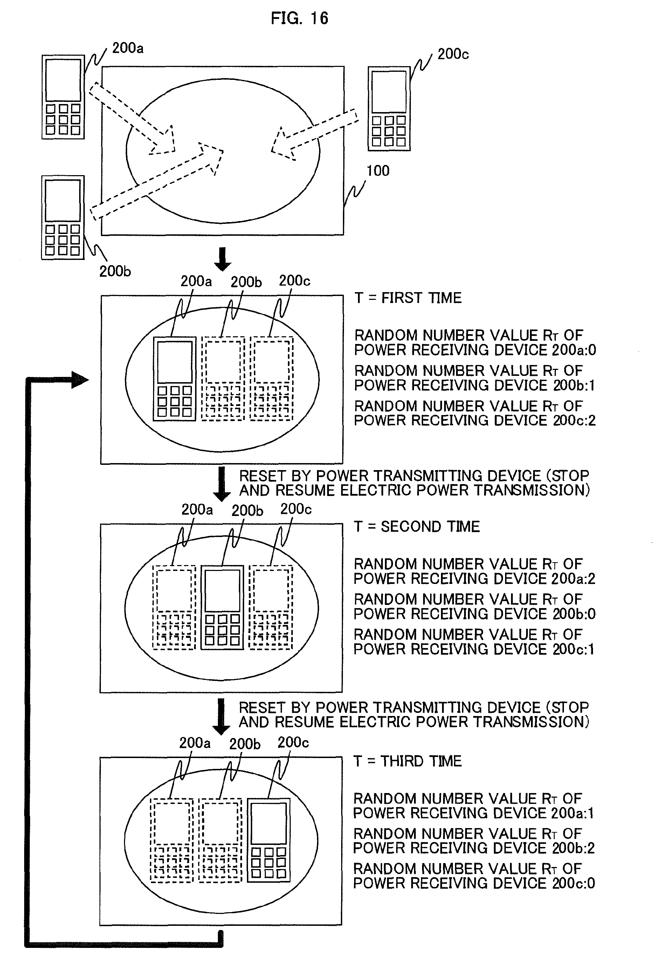

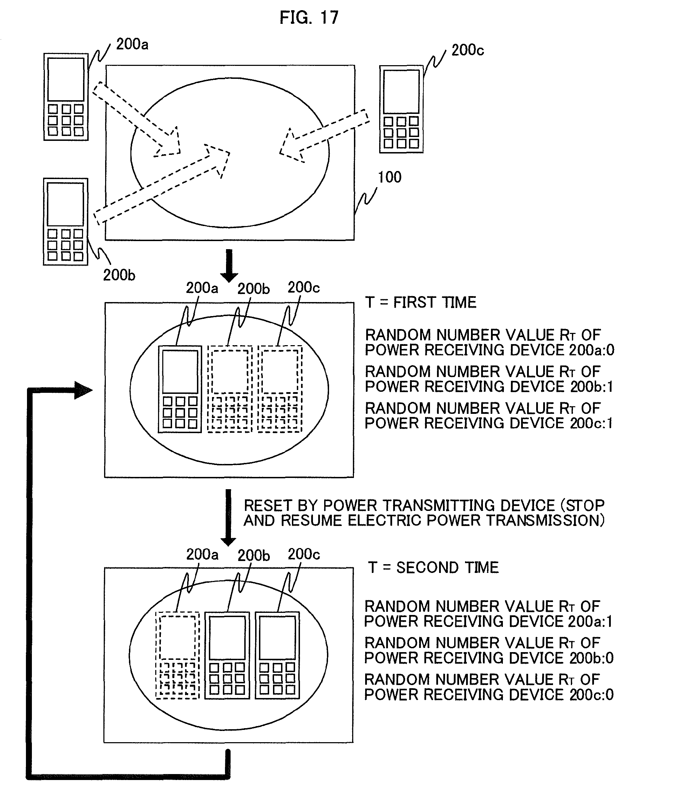

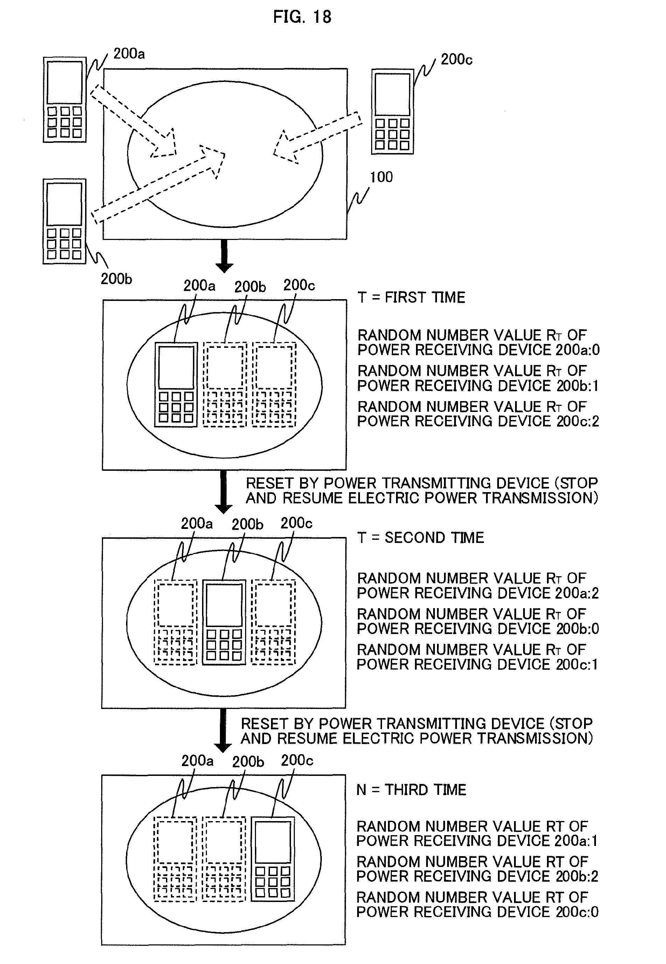

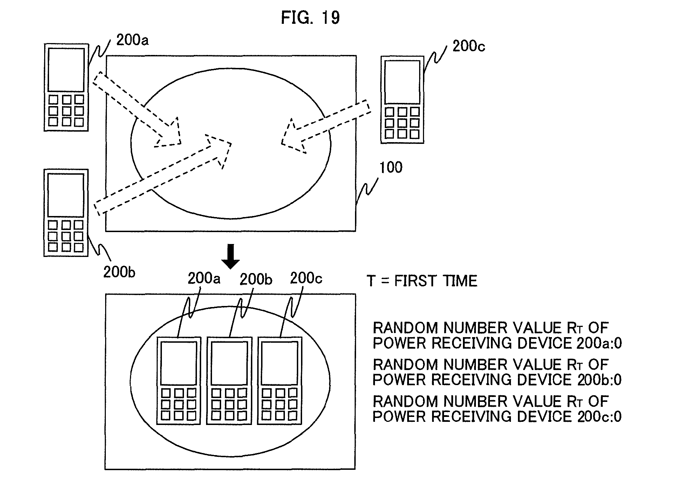

FIGS. 16 to 19 illustrate examples of charge control when the power transmitting device 100 charges a plurality of the power receiving devices 200. In the drawings, among a plurality of (three in the exemplified drawings) the power receiving devices 200 arranged on the power transmitting device 100, the power receiving device 200 depicted by the solid line is a charging target. FIGS. 16 and 17 illustrate a time division charge mode in which the three power receiving devices 200a to 200c are charged by time division at every constant period while the power receiving device 200 that becomes the charging target is switched. FIG. 18 illustrates a priority order charge mode in which the power receiving devices 200 are charged in turn one by one such that the charge of the next power receiving device 200 is started at the timing that the charge of the one power receiving device 200 is completed. FIG. 19 illustrates a simultaneous charge mode in which a plurality of the power receiving devices 200 are charged simultaneously.

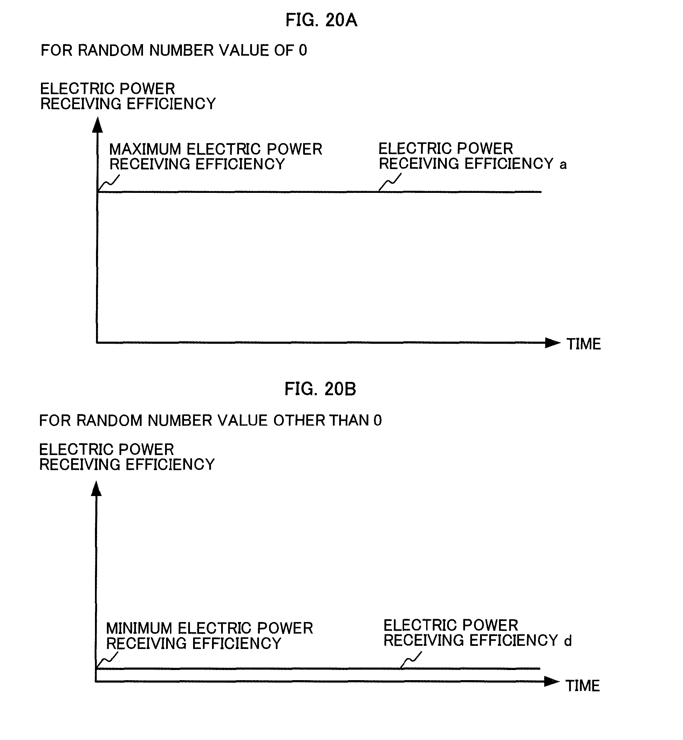

In a case where the power receiving device 200 operates in accordance with the corresponding relation between the random number value 401 and the electric power receiving efficiency as illustrated in FIG. 20, when the random number values 401 to be generated by the power receiving device 200 are represented by the symbol $R_T$, combination of the values $R_T$ needs to be the values described in FIGS. 16 to 19 respectively, in the respective charge modes of FIGS. 16 to 19. In the drawings, the symbol T indicates the T-th power receiving process, and the symbol $R_T$ indicates the random number value 401 in the T-th power receiving process. The power receiving process means the power reception when the electric power transmission from the power transmitting device 100 is started, and it is determined that the random number values 401 satisfy the predetermined condition. In FIGS. 16 to 19, the random number value generators 216 of the power receiving devices 200 generate three types of random number values "0", "1", and "2". In other words, the predetermined condition for the random number values 401 is the condition that the random number values 401 are one of the values "0", "1 ", and "2". However, the random number values generated by the random number value generator 216 do not need to be the above-described values. For example, m-types of random number values from "0" to "m" (m is an arbitrary integer) are generated, and the subsequent operation is changed in accordance with whether the random number value is an even or odd number.

Between the random number value $R_T$ in the one power receiving process and the random number value $R_{T-1}$ in the different power receiving process directly before the one power receiving process illustrated in FIGS. 16 to 19, the following relation formula (1) is established.

$$R_T = R_{T-1} - 1 \text{ (in the case of } R_T < 0, R_T = 2 \text{) ...(1)}$$

When the power receiving devices 200 generate the random number values via the random process each time by using the operational flowchart described in the embodiment 1 or 2 in each of the power receiving processes in FIGS. 16 to 19, the generation of the random number values is repeated until the combination of the random number values generated by the power receiving devices 200 satisfies the predetermined condition for the random number values 401. Accordingly, some time is required for the above process. For this reason, it takes some time to switch the power receiving state of the power receiving device 200 that is the charging target of the power transmitting device 100.

However, if once the combination of the random number values 401 generated by the respective power receiving devices 200 satisfies the predetermined condition for the random number values 401, each power receiving device 200 can obtain the random number values 401 that is necessary for the switching of the power receiving state and satisfy the predetermined condition for the random number values 401 by calculation in accordance with the relation formula (1). Accordingly, it is possible to reduce time necessary for switching the power receiving states of the power receiving devices 200, compared with the case where the random number values 401 are generated via the random process each time.

In the embodiment 3, description is made about a new power receiving sequence, performed by the power transmitting device 100, that reduces time needed to switch the power receiving states of the power receiving devices 200 and makes the frequency of updating of the random number value 401 described in the embodiment 1 as low as possible, when power reception control of at least one power receiving device 200 is performed by the power transmitting device 100.

Specifically, instead of generating the random number values 401 via the random process each time by the power receiving devices 200 as in the embodiment 1, a new process of regularly generating the random number values 401 by processing the already generated random number values 401 is introduced so that the process of regularly generating the random number values 401 is used together with the process of generating the random number values 401via the random process. When the power receiving device 200 generates the random number value 401, the power receiving device 200 determines which of the processes is used, in accordance with the timing that the electric power transmission from the power transmitting device 100 is stopped. This determination actually uses a different standard that is concretely specified from the timing.

The embodiment 3 includes the same configuration, function, elements, and the like as the embodiments 1 and 2. Accordingly, as for the same configuration or process as the configuration or process expressed in FIGS. 1 to 15, the same reference symbols are attached, and description is basically omitted.

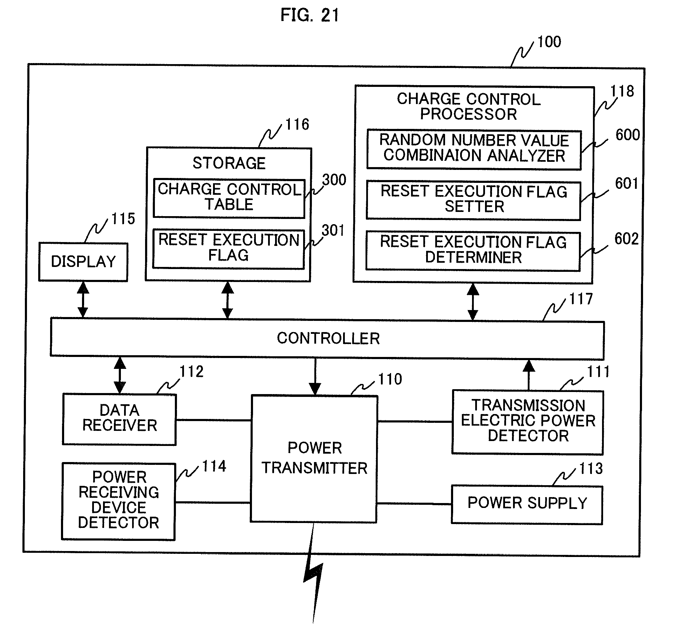

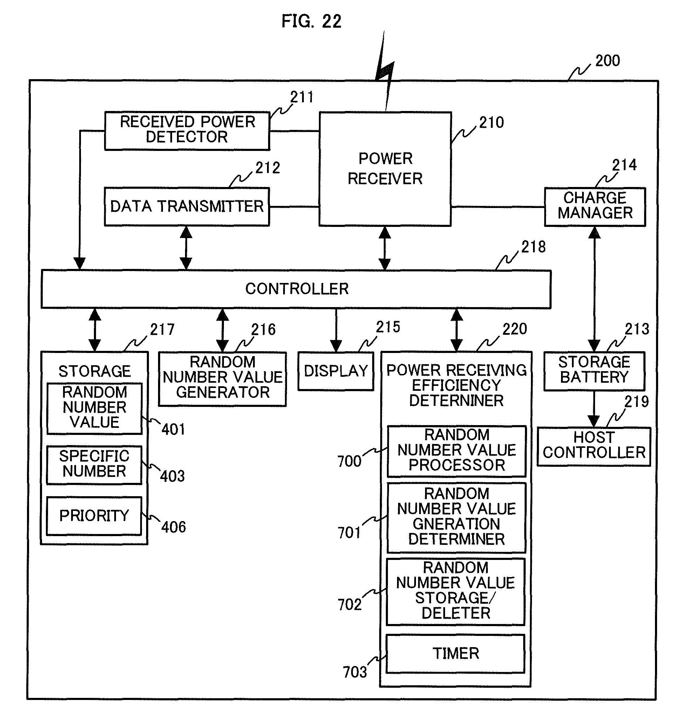

Configuration examples of the power transmitting device 100 and the power receiving device 200 according to the embodiment 3 are illustrated in FIGS. 21 and 22, respectively.

(Power Transmitting Device)

Compared with the power transmitting device 100 illustrated in FIG. 1, the power transmitting device 100 illustrated in FIG. 21 is configured so as to further comprise a charge control processor 118, and so as to hold a reset execution flag 301 in the storage 116. As for the other elements, the configuration is the same as the power transmitting device 100 of FIG. 1, so that the same reference symbols are attached, and description is omitted.

The reset execution flag 301 is a flag used for determining whether or not the electric power transmission should be stopped, and the power receiving device 200 should be reset before reception of all of the initializing commands 501 transmitted from the power receiving devices 200 is finished, after the power transmission to the power receiving devices 200 is started. The reset of the power receiving device 200 means that the power reception by the power receiving device 200 is temporarily stopped, and then is resumed. This reset is performed accompanying the event that the electric power transmission by the power transmitting device 100 is temporarily stopped, and then is resumed.

When the reset execution flag 301 is in an on state, the power transmitting device 100 temporarily stops the electric power transmission, and then resumes the electric power transmission to reset the power receiving devices 200 before the power transmitting device 100 finishes receiving all of the initializing commands 501 transmitted from the power receiving devices 200. Meanwhile, when the reset execution flag 301 is in an off state, the power transmitting device 100 receives all of the initializing commands 501 transmitted from the power receiving devices 200, and in accordance with an analyzing result of these received commands, determines whether to continue the electric power transmission or to temporarily stop the electric power transmission and resume the electric power transmission so as to reset the power receiving devices 200.

The charge control processor 118 comprises a random number value combination analyzer 600, a reset execution flag setter 601, and a reset execution flag determiner 602.

The random number value combination analyzer 600 analyzes the random number values 401 stored in the initializing commands 501 received from the power receiving devices 200.

The reset execution flag setter 601 sets the reset execution flag 301 in the storage 116 to be in the on state or off state, in accordance with the random number values 401 stored in the initializing commands 501 received from the power receiving devices 200.

The reset execution flag determiner 602 determines the state (on state or off state) of the reset execution flag 301 stored in the storage 116.

(Power Receiving device)

The power receiving device 200 illustrated in FIG. 22 further comprises a random number value generation processor 220, compared with the power receiving device 200 illustrated in FIG. 1. As for the other elements, the configurations are the same as the power receiving device 200 of FIG. 1, so that the same reference numbers are attached, and description is omitted.

The random number value generation processor 220 performs various types of processes in a case of generating the random number value in a method different from the method performed by the random number value generator 216 that generates the random number value via the random process. The random number value generation processor 220 stores the generated random number value in the storage 217, and deletes the stored random number value. The random number value generation processor 220 comprises a random number value processor 700, a random number value generation determiner 701, a random number value storage/deleter 702, and a timer 703.

The random number value processor 700 processes the random number value 401 by performing predetermined calculation on the random number value 401 stored in the storage 217. Thereby, the random number value processor 700 generates the new random number value 401. Specifically, in this example, three power receiving devices 200 exist, and it is assumed that the generated random number values 401 are "0", "1", and "2". The stored random number value 401 is assumed to be the random number value used last time, and is represented by the symbol $R_{T-1}$. The random number value 401 newly generated by the calculation is represented by the symbol $R_T$. In this case, the value $R_T$ is obtained by the calculation based on the relation formula (1) described above, using the value $R_{T-1}$. The controller 218 stores the generated random number value 401 in the various types of commands.

The random number value generation determiner 701 determine whether to generate the new random number value 401 by the random number value generator 216 or to generate the new random number value 401 by the process of the random number value processor 700. Details of this determination will be described later.

The random number value storage/deleter 702 saves the random number value 401 by storing the random number value 401 in the storage 217, and deletes the random number value 401 from the storage 217.

The timer 703 measures time. In FIG. 22, the timer 703 is included in the power receiving efficiency determiner 220. However, the configuration is not limited to this. The timer 703 can be provided at an arbitrary part in the power transmitting device 100.

(Operation of Power Transmitting Device)

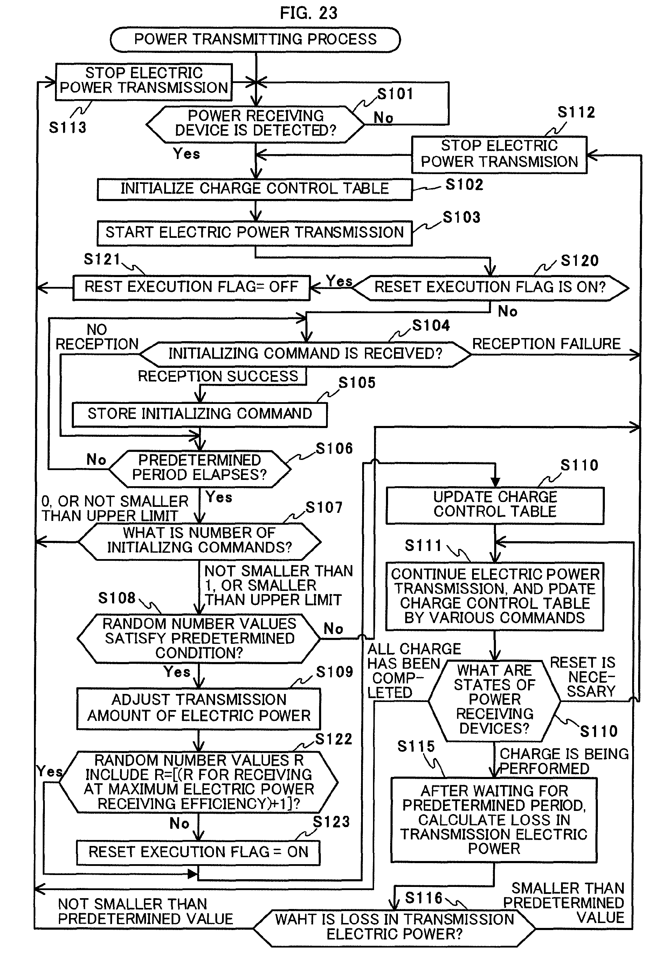

Next, operation of the power transmitting device 100 is described. FIG. 23 is a flowchart for describing a power transmitting process performed by the power transmitting device 100. The same step numbers are attached to the same process steps as the flowchart of FIG. 5. In the following, a part different from the flowchart illustrated in FIG. 5 will be mainly described.

The process from the step S101 to the step S 103 is the same as the process described by referring to FIG. 5. Next, the reset execution flag determiner 602 determines whether or not the reset execution flag 301 stored in the storage 116 is in the on state (step S120). When it is determined that the reset execution flag 301 is in the on state (step S120; Yes), the controller 117 of the power transmitting device 100 sets the reset execution flag 301 in the storage 116 to be in the off state, via the reset execution flag setter 601 (step S121), stops the electric power transmission (step S113), performs the steps S101 and S102, and then resumes the electric power transmission (step S 103). Subsequently, at the time of performing the step S 120, the reset execution flag is already set in the off state by the process of the step S 121. The power receiving devices 200 is reset by starting the electric power transmission, to generate the new random number values 401.

Meanwhile, when it is determined that the reset execution flag 301 is in the off state (step S120; No), the controller 117 determines whether or not the initializing commands 501 transmitted from the power receiving devices 200 are received (step S 104). When the initializing commands 501 are received (step S104; Yes), the power transmitting device 100 performs, at the steps S105 to S108, the same process as the process of the same step numbers in FIG. 5. Then, as described below, the power transmitting device 100 analyzes the random number values 401 stored in the initializing commands 501.

When the random number value combination analyzer 600 determines that all of the received random number values 401 do not satisfy the predetermined condition at the step S108 (step S108; No), the controller 117 controls the power transmitter 110 to stop the electric power transmission (step S 112) and then resume the electric power transmission (step S103). Thereby, the controller 117 causes the power receiving devices 200 to generate the random number values 401 again. The predetermined condition at this time is assumed to include the condition that the random number values 401 include the random number value 401 corresponding to the maximum electric power receiving efficiency. While the controller 117 determines whether or not all of the random number values 401 satisfy the predetermined condition at the step S108 in FIG. 5, according to the embodiment 3, the random number value combination analyzer 600 of the charge control processor 118 undertakes a part of the function of the controller 117 to perform this determination. Accordingly, in a broad sense, it is interpreted that the controller 117 performs this determination.

Meanwhile, when the random number value combination analyzer 600 determines that all of the random number values 401 satisfy the predetermined condition (step S 108; Yes), the controller 117 adjusts a transmission amount of electric power in accordance with the number of the power receiving devices 200 (step S 109). Next, the random number value combination analyzer 600 determines whether or not the received random number values 401 include the value that is the sum of the value "1" and the random number value 401 which was used at the last time for the electric power reception by the power receiving device 200 at the maximum electric power receiving efficiency (step S122). This determination is made for determining whether or not the random number value 401 for receiving the electric power at the maximum electric power receiving efficiency will be included in the random number values $R_T$ generated by the calculation based on the relation formula (1) when the random number values 401 are regenerated by resetting the power receiving devices 200. When a result of this determination is yes, it is guaranteed that the predetermined condition for the random numbers will be satisfied, so that the power receiving devices 200 perform the next process.

When it is determined that the received random number values 401 do not include the value that is the sum of the value "1" and the random number value 401 for the electric power reception by the power receiving device 200 at the maximum electric power receiving efficiency (step S122; No), the reset execution flag setter 601 sets the reset execution flag 301 in the on state (step S123), and the process proceeds to the step S110.

When it is determined that the received random number values 401 include the value that is the sum of the value "1" and the random number value 401 for the electric power reception by the power receiving device 200 at the maximum electric power receiving efficiency (FIG. 20A) at the step S122 (step S122; Yes), the power transmitting device 100 performs the step S110 while maintaining the reset execution flag 301 in the off state. The process of the step S 110 and the subsequent steps S111 to S116 is the same as the process of the steps S110 to S 116 in FIG. 5.

In the above-described process, when the reset execution flag 301 is in the off state, the random number values 401 include the random number value that is the sum of the value "1" and the random number value 401 corresponding to the maximum electric power receiving efficiency as a result of the steps S122 and S123. Accordingly, at the time of the next reset of the power receiving devices, the random number values 401 are generated on the basis of the relation formula (1). The random number values 401 generated by the random number value processors 700 include the random number value 401 corresponding to the maximum electric power receiving efficiency, so that the predetermined condition for the random number values is satisfied. Meanwhile, when the reset execution flag 301 is in the on state, the random number values 401 do not include the random number value that is the sum of the value "1" and the random number value 401 corresponding to the maximum electric power receiving efficiency. Accordingly, when the random number values 401 are generated by the random number value processors 700 on the basis of the relation formula (1), the generated random number values do not include the random number value 401 corresponding to the maximum electric power receiving efficiency. For this reason, the predetermined condition for the random number values is not satisfied. Further, when the reset execution flag 301 is in the on state (step S120; Yes), the electric power transmission is stopped temporarily, and is then resumed at the earlier stage of the power transmitting process. Meanwhile, when the reset execution flag 301 is in the off state (step S120; No), the stop and resuming of the electric power transmission, that is, the reset of the power receiving devices 200 is performed after the electric power transmission is continuously performed. Accordingly, the stop and resuming of the electric power transmission is performed after a predetermined period of time elapses. When the reset execution flag 301 is in the on state (step S120; Yes), the stop and resuming of the electric power transmission, that is, the rest of the power receiving devices 200 is performed at the earlier stage of the power transmitting process. The power receiving device 200 distinguishes the difference of these reset timings to determine a method of generating the random number values. The predetermined period of time will be described later.

By the above-described operational flow, in accordance with the combination of the random number values 401 received from the power receiving devices 200, the power transmitting device 100 determines whether to continuously perform the electric power transmission or to stop the electric power transmission. When the electric power transmission is stopped, the power transmitting device 100 adjusts the timing of stopping the electric power transmission on the basis of whether the reset execution flag 301 is in the on state or in the off state. On the basis of this stopping timing of the electric power transmission, the power receiving device 200 determines whether or not to store the generated random number value 401 in the storage 217, as will be described later. Depending on whether the random number value 401 is stored in the storage 217, the power receiving device 200 determines whether to newly generate the random number value 401 or to process the random number value generated last time to generate the new random number value 401, at the time of receiving the electric power transmitted from the power transmitting device 100. Thereby, time required for switching the power receiving state of the power receiving device 200 is reduced when the power transmitting device 100 performs power receiving control.

(Operation of Power Receiving Device)

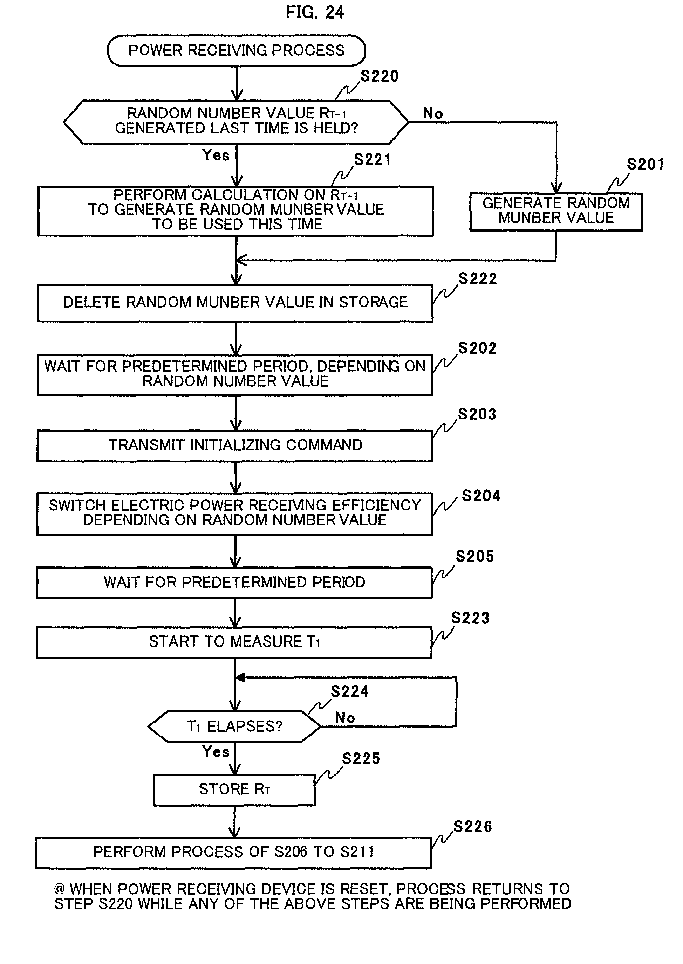

Next, operation of the power receiving device 200 is described. FIG. 24 is a flowchart for describing the power receiving process performed by the power receiving device 200. Description is made only about a part different from the flowchart of FIG. 7. As for the same process as the process of FIG. 7, the same step numbers are attached, and the description is basically omitted.

The process shown in this flowchart is started by reception of electric power by the power receiving device 200. This electric power is transmitted from the electric power transmitting device 100. Like the case of FIG. 7, when reset to the electric power receiving device 200 is performed, the process is performed from the first step in the flowchart whichever process step is being performed at the time of the reset to the power receiving device 200. This is not clearly illustrated. The first step in the embodiment 3 is the step S220.

The random number value generation determiner 701 determines whether or not the random number value $R_{T-1}$ generated last time is held in the storage 217 (step S220).

When it is determined that the random number value $R_{T-1}$ is not held (step S220; No), the random number value generator 216 newly generates the random number value 401 by the random process (step 5201). This process is the same as the process at the step S201 of FIG. 7. Meanwhile, when it is determined that the random number value $R_{T-1}$ is held (step S220; Yes), the random number value processor 700 performs calculation based on the predetermined calculation formula, for example, the relation formula (1), on the random number value $R_{T-1}$ held in the storage 217 to thereby process the random number value $R_{T-1}$. In this manner, the random number value processor 700 generates the random number value $R_T$ as the new random number value 401 (step S221). The random number value storage/deleter 702 deletes the random number value 401 stored in the storage 217 (step S222).

Then, the power receiving device 200 performs the process from the steps S202 to S205 like the process flow of FIG. 7. In other words, the power receiving device 200 transmits the initializing command (step S203), and switches the electric power receiving efficiency (refer to FIG. 20, for example) depending on the generated random number value 401 (step S204). Then, the power receiving device 200 waits for a lapse of the predetermined period of time (step S205).

Next, the timer 703 starts to measure time (step S223). The time at which this time measurement is finished is set as time $T_1$. The time $T_1$ is set to be shorter than the time period by which the power receiving devices 200 to be charged are switched in turn in the power receiving control method for charging a plurality of the power receiving devices 200 by the time division illustrated in FIG. 16 and FIG. 17. The controller 218 determines whether or not the time measured by the timer 703 reaches the time $T_1$ (step S224). When the time does not reach the time $T_1$ (step S224; No), the controller 218 waits until the time reaches the time $T_1$. When the time reaches the time $T_1$ (step S224; Yes), the controller 218 stores the generated value $R_T$ in the storage 217 (step S225). Then, the power receiving device 200 performs the same process as the process from the step S206 to the step S211 illustrated in FIG. 7 (step S226). The process contents of the step S226 are the same as the contents of FIG. 7 in that the process contents of the step S226 are the same as the respective process contents from the step S206 to the step S211 shown in FIG. 7, and the after-process steps to which the process of the step S226 proceeds are the same as the process contents of FIG. 7. Accordingly, the step S226 includes the process loop.

By the above-described operational flow, the random number value 401 is not stored in the storage 217 before a lapse of the time $T_1$ at the step S223, and the random number value 401 is stored in the storage 217 after a lapse of the time $T_1$ at the step S223. In the power receiving device 200, whether the random number value 401 is stored in the storage 217 or not depends on the fact that the timing that the power transmitting device 100 stops the electric power transmission, that is, the timing of the reset of the power receiving devices 200 is later than the timing of a lapse of the time $T_1$. Accordingly, in accordance with whether the random number value $R_{T-1}$ generated last time is stored in the storage 217 at the timing that the power transmitting device 100 then starts the electric power transmission, it is determined whether to newly generate the random number value 401 or to process the already generated random number value 401. This is the same as determining whether to newly generate the random number value 401 or to process the already generated random number value 401 in accordance with the timing that the power transmitting device 100 stops the electric power transmission. This process guarantees that the predetermined condition for the random number values 401 is satisfied, in the case where the new random number is generated by processing the already generated random number value 401 when the power transmitting device 100 performs the charge control. Accordingly, a process of updating the random number value 401 for satisfying the predetermined condition becomes unnecessary, so that time required for generating the random number value 401 is made short. For this reason, it is possible to reduce time required for switching the power receiving state of the power receiving device 200.

In the embodiment 3, the method of controlling the power reception of the three power receiving devices 200 is described. However, even when the number of the power receiving devices 200 is the number other than three, the above-described device configuration and operational flow reduces time required for switching the charging target power receiving device 200, at the time that the power transmitting device 100 performs the charge control. For example, when the number of the power receiving devices 200 is "m" (m is an integer that is two or more), if $R_T<0$, $R_T$ is set as "$R_T=m-1$" in the equation (1).

Further, the random number values 401 do not need to be limited to values of "0" to "m-1", as well. For example, the random number values 401 are the "m" numerical values that increase "n" by "n" from the beginning value of "k", and the formula for calculating the new random number $R_T$ from the last random number value $R_{T-1}$ is set as the following relation formula (2) instead of the relation formula (1). In this case, "k" is an arbitrary numerical value, and "n" is an arbitrary positive integer.

$$R_T = R_{T-1} - n \text{ (in the case of } R_T < k, R_T = k + (m-1)*n) \ldots (2)$$

When the relation formula (2) is used for the processing and generating of the random number value 401 by the random number value processor 700, the process contents of the step S 122 in the power transmitting process shown in FIG. 23 become the determination of whether or not the received random number values 401 include the value that is the sum of "n" and the random number value 401 for receiving the electric power at the maximum electric power receiving efficiency. When the process contents of the step S122 are more generalized, the process contents of the step S122 by the random number value combination analyzer 600 are as follows. The random number value processor 700 generates the new random number value $R_T$ using $R_{T-1}$ by a relation formula, where $R_{T-1}$ is the random number value used in the process of receiving the electric power last time. The random number value combination analyzer 600 calculates the random number value $R_{T-1}$ based on the relation formula with $R_T$ being set to the random number value for receiving the electric power at the maximum electric power receiving efficiency. Then, the random number value combination analyzer 600 determines whether or not the received random number values 401 include the random number value corresponding to the calculated random number value $R_{T-1}$.

In another example of the above-described process,, the minimum random number value 401 corresponds to the maximum electric power receiving efficiency, and the larger random number value corresponds to the smaller electric power receiving efficiency. Alternatively, in the above-described process, the maximum random number value 401 corresponds to the maximum electric power receiving efficiency, and the smaller random number value corresponds to the smaller electric power receiving efficiency.

The present invention is not limited to the above-described embodiments. According to the present invention, various types of alternation and application can be made.

Shapes, materials, and the like of the primary coil and the secondary coil are arbitrary. For example, a diameter of the primary coil is made large so that a plurality of the power receiving devices 200a are simultaneously arranged at freely selected positions on the power transmitting device 100.

A method of performing communication between the power transmitting device 100 and the power receiving device 200 is arbitrary. This communication is performed by an arbitrary communication method, for example, wireless local area network (Local Area Network) such as the Institute of Electrical and Electronic Engineers (IEEE) 802.11b, the IEEE 802.11g, and the IEEE 802.11n, infrared communication, RFID, or Bluetooth (registered trademark).

In addition, each of the above-described hardware configurations and flowcharts is one example, and can be arbitrarily altered or modified.

A main part that performs the processes of the power transmitting device 100 and the power receiving device 200 is not limited to a dedicated system, and is embodied by using a usual computer system in an example. For example, a computer program for performing the above-described operation is stored in a non-transitory computer readable recording medium (flexible disk, CD-ROM, DVD-ROM, or the like) to be distributed so that this computer program is installed in a computer. Thereby, the power transmitting device 100 and the power receiving device 200 for performing the above-described processes are configured. Alternatively, the computer program is stored in a storage provided in a server device in communication network such as the Internet to be downloaded, for example, by a usual computer system. Thereby, the power transmitting device 100 and the power receiving device 200 is configured.

When the functions of the power transmitting device 100 and the power receiving device 200 are embodied by distributing the functions among an operating system (OS) and an application program, or by corporation of the OS and the application program, only the part corresponding to the application program is stored in the non-transitory recording medium and the storage in an example.

The computer program is superimposed in a carrier wave to be distributed via a communication network in an example. For example, the above-described computer program is listed in the Bulletin Board System (BBS) in the communication network so that the computer program is distributed via the network. In this case, the above-described process is performed by activating this computer program to be executed under control of the OS like other application programs in an example.

A part of or all of the above-described embodiments is not limited to the above-described contents as described in the following remarks.

(Remark 1)

A power transmitting device that transmits electric power to at least one power receiving device in a contactless manner, comprising:

a power transmitter possessing a power transmitting side resonant frequency that is a resonant frequency having a predetermined relation with a power receiving side resonant frequency that is a resonant frequency of a part, the part being provided in the power receiving device and receiving the electric power, and adapted to transmit the electric power at the power transmitting side resonant frequency in a contactless manner;
a data receiver adapted to receive, from the power receiving device, a command including a random number value for representing a power receiving state of the power receiving device, when the power transmitter is adapted to start to transmit the electric power to the power receiving device, wherein the random number value is generated by the power receiving device each time reception of the electric power is started by start of transmission of the electric power; and
a controller adapted to perform control in which the controller is adapted to determine whether or not all of the random number value satisfy a predetermined condition, when the predetermined condition is satisfied, the controller is adapted to continue transmission of the electric power to the power receiving device via the power transmitter, and when the predetermined condition is not satisfied, the controller is adapted to perform a reset process of temporarily stopping transmission of the electric power to the power receiving device, and then resuming the transmission of the electric power via the power transmitter to receive the command including a new random number value from the power receiving device via the data receiver (112), and perform control of repeating stopping and subsequent resuming of the transmission of the electric power, and reception of the command including a further new random number value via the data receiver until the new random number value satisfies the predetermined condition.

(Remark 2)

The power transmitting device according to the Remark 1, comprising:

a power receiving device detector adapted to detect that the power receiving device exists at a power receivable position that is a position where the power receiving device receives the electric power by transmission of the electric power from the power transmitting device,
wherein the controller is adapted to perform control of continuing the transmission of the electric power via the power transmitter on condition that the power receiving device detector detects that the at least one power receiving device exists at the power receivable position.

(Remark 3)

The power transmitting device according to the Remark 1 or 2, comprising:

a reset execution flag setter including a reset execution flag, and adapted to set the reset execution flag in an on state or an off state; and
a reset execution flag determiner adapted to determine whether the reset execution flag is in the on state or the off state,
wherein after the power transmitter is adapted to start transmission of the electric power to the power receiving device, the controller is adapted to make determination of whether the rest execution flag is in the on state or the off state, via the reset execution flag determiner, and only when a result of the determination indicates the on state, the controller is adapted to set the reset execution flag in the off state via the reset execution flag setter, and to perform the reset process of temporarily stopping the transmission of the electric power to the power receiving device, and then resuming the transmission of the electric power without waiting reception of the command including the random number value so that the command including the new random number value from the power receiving device is received, and
when the random number value includes a predetermined specific value, the controller is adapted to set the reset execution flag in the on state via the reset execution flag setter regardless of the result of the determination.

(Remark 4)

The power transmitting device according to any one of the Remarks 1 to 3, wherein the data receiver is adapted to receive a command including a received electric power value indicating electric power that is being received by the power receiving device, and
the controller is adapted to stop transmission of the electric power to the power receiving device when a difference value between sum of the received electric power value received by the data receiver of the at least one power receiving device and a transmission electric power value indicating the electric power value that is being transmitted to the at least one power receiving device is larger than a predetermine value.

(Remark 5)

The power transmitting device according to any one of the Remarks 1 to 4, wherein the data receiver is adapted to receive a command including a charge state of the power receiving device, and
when one of the charge state of the at least one power receiving device indicates charge completion, the controller is adapted to stop transmission of the electric power to the power receiving device corresponding to the charge state indicating charge completion, then to resume the transmission of the electric power, and to receive the command including the new random number value from the power receiving device corresponding to the charge state indicating charge completion.

(Remark 6)

The power transmitting device according to any one of the Remarks 1 to 5, wherein the data receiver is adapted to receive a command including priority for causing the power receiving device to preferentially receive electric power, and
the controller is adapted to set the predetermined condition for the random number value in accordance with the priority.

(Remark 7)

A power receiving device that receives electric power from a power transmitting device transmitting the electric power in a contactless manner, the power receiving device having information that shows corresponding relation between random number values and electric power receiving efficiencies,
the power receiving device comprising:

a power receiver with a variable resonant frequency including a same frequency as a power transmitting side resonant frequency that is a resonant frequency of a power transmitter, the power transmitter being provided in the power transmitting device and adapted to transmit the electric power, the power receiver being adapted to receive the electric power transmitted from the power transmitting device, at a power receiving side resonant frequency that is a resonant frequency controlled within the variable range of the variable resonant frequency;
a random number value generator adapted to generate a random number value;
a data transmitter adapted to transmit data to the power transmitting device; and
a controller adapted to perform control in which the controller is adapted to start reception of the electric power at a resonant frequency set in advance, by start of transmission of the electric power from the power transmitting device, and each time the reception of the electric power is started, the controller is adapted to generate the random number value via the random number value generator, to generate a command including the generated random number value, and to transmit the generated command to the power transmitting device via the data transmitter,
wherein on the basis of an electric power receiving efficiency corresponding to the generated random number value, the controller is adapted to control the power receiving side resonant frequency within the variable range of the variable resonant frequency to continue reception of the electric power by the power receiver.

(Remark 8)

The power receiving device according to the Remark 7, wherein control of the resonant frequency of the power receiver based on the random number value is control of switching the power receiving side resonant frequency to one of two frequencies by time distribution depending on the random number value wherein the two frequencies are: the same frequency as the power transmitting side resonant frequency; and a frequency generating a state that does not resonate with the power transmitter.

(Remark 9)

The power receiving device according to the Remark 7, wherein control of the resonant frequency of the power receiver based on the random number value is control of switching the power receiving side resonant frequency to one of a plurality of frequencies on the basis of the  random number value wherein the plurality of frequencies differ from each other by different amounts, and include the same frequency as the power transmitting side resonant frequency, and a frequency generating a state that does not resonate with the power transmitter.

(Remark 10)

The power receiving device according to any one of the Remarks 7 to 9, further comprising:

a storage;
a random number value processor adapted to process the random number value by predetermined calculation to generate new random number value; and
a random number value storage/deleter adapted to store the generated random number value in the storage, or to delete the random number value stored in the storage,
wherein when transmission of the electric power from the power transmitting device is started, the controller is adapted to newly generate, as the random number value, a random number value via the random number value generator in a case where the random number value is not stored in the storage, and to process the stored random number value via the random number value processor to generate a new random number value as the random number value in a case where the random number value is stored in the storage.

(Remark 11)

The power receiving device according to the Remark 10, wherein after the random number value is generated, the controller is adapted to delete the stored random number value in a case where the random number value stored in the storage exists, and to set the electric power receiving efficiency corresponding to the generated random number value, and then, the controller is adapted to store the generated random number value in the storage after a predetermined period of time elapses.

(Remark 12)

The power receiving device according to any one of the Remarks 7 to 11, wherein the controller is adapted to transmit, to the power transmitting device, via the data transmitter, a command including priority for electric power reception.

(Remark 13)

A power transmitting method for transmitting electric power to at least one power receiving device by a power transmitting device in a contactless manner, the method comprising:

a power transmitting step of transmitting the electric power in a contactless manner at a power transmitting side resonant frequency that is a resonant frequency having a predetermined relation with a power receiving resonant frequency that is a resonant frequency of a part, the part being provided in the power receiving device and receiving the electric power;

a data receiving step of receiving, from the power receiving device, a command including a random number value for representing a power receiving state of the power receiving device, when transmission of the electric power to the power receiving device is started at the power transmitting step, wherein the random number value is generated by the power receiving device each time the power receiving device starts to receive the electric power by start of the transmission of the electric power; and

a determining step of determining whether or not all of the random number value received at the data receiving step satisfy a predetermined condition;

an electric power transmission continuing step of continuing transmission of the electric power to the power receiving device when it is determined at the determining step that all of the random number value satisfy the predetermined condition; and

a repeating step of temporarily stopping transmission of the electric power to the power receiving device, and returning to the power transmitting step when it is determined at the determining step that all of the random number value do not satisfy the predetermined condition.

(Remark 14)

A power receiving method for receiving electric power by a power receiving device from a power transmitting device transmitting the electric power in a contactless manner, the method comprising:

a random number value generating step of generating a random number value each time reception of the electric power is started by start of transmission of the electric power from the power transmitting device;

a data transmitting step of generating a command including the random number value generated at the random number value generating step, and transmitting the generated command to the power transmitting device; and

a power receiving step of setting, to a predetermined resonance frequency, a power receiving side resonant frequency that is a resonant frequency of a part, the part being provided in the power receiving device and receiving the electric power, and then determining an electric power receiving efficiency corresponding to the random number value generated at the random number value generating step on the basis of information that shows corresponding relation between random number values and electric power receiving efficiencies, and performing control based on the determined electric power receiving efficiency to continue reception of the electric power transmitted from the power transmitting device.

(Remark 15)

A power transmitting program for transmitting electric power to at least one power receiving device by a power transmitting device in a contactless manner, the program causing the power transmitting device as a computer to perform:

a power transmitting step of transmitting the electric power in a contactless manner at a power transmitting side resonant frequency that is a resonant frequency having a predetermined relation with a power receiving resonant frequency that is a resonant frequency of a part provided in the power receiving device and receiving the electric power;

a data receiving step of receiving, from the power receiving device, a command including a random number value for representing a power receiving state of the power receiving device, when transmission of the electric power to the power receiving device is started at the power transmitting step, wherein the random number value is generated by the power receiving device each time the power receiving device starts to receive the electric power by start of the transmission of the electric power; and

a determining step of determining whether or not all of the random number value received from the at least one power receiving device at the data receiving step satisfy a predetermined condition;

an electric power transmission continuing step of continuing transmission of the electric power to the power receiving device when it is determined at the determining step that all of the random number value received from the at least one power receiving device satisfy the predetermined condition; and

a repeating step of temporarily stopping transmission of the electric power to the power receiving device, and returning to the power transmitting step when it is determined at the determining step that all of the random number value received from the at least one power receiving device do not satisfy the predetermined condition.

(Remark 16)

A power receiving program for receiving electric power by a power receiving device from a power transmitting device transmitting the electric power in a contactless manner, the program causing the power receiving device functioning as a computer to perform:

a random number value generating step of generating a random number value each time reception of the electric power is started by start of transmission of the electric power from the power transmitting device;

a data transmitting step of generating a command including the random number value generated at the random number value generating step, and transmitting the generated command to the power transmitting device; and

a power receiving step of setting, in advance, a power receiving side resonant frequency that is a resonant frequency of a part provided in the power receiving device and receiving the electric power, and then determining an electric power receiving efficiency corresponding to the random number value generated at the random number value generating step on the basis of information in which random numbers value and electric power receiving efficiencies are made to correspond to each other, and performing control based on the determined electric power receiving efficiency to continue reception of the electric power transmitted from the power transmitting device.

The present application claims priority based on the patent application No. 2011-81722 that was filed in Japanese Patent Office on April 1, 2011 which includes the specification, claims, drawings, and abstract. The entire contents disclosed in this original application are incorporated by reference in the present application.

Reference Signs List

| 100 | Power transmitting device |
| 110 | Power transmitter |
| 111 | Transmission power detector |
| 112 | Data receiver |
| 113 | Power supply |
| 114 | Power receiving device detector |
| 115 | Display |
| 116 | Storage |
| 117 | Controller |

| 118 | Charge control processor |
|---|---|
| 200 | Power receiving device |
| 210 | Power receiver |
| 211 | Received power detector |
| 212 | Data transmitter |
| 213 | Storage battery |
| 214 | Charge manager |
| 215 | Display |
| 216 | Random number value generator |
| 217 | Storage |
| 218 | Controller |
| 219 | Host controller |
| 220 | Power receiving efficiency determiner |
| 230 | Power receiving side coil |
| 250, 251, 253, 255, 257 | Capacitor |
| 252, 254, 256, 258 | Switch |
| 300 | Charge control table |
| 301 | Reset execution flag |
| 401 | Random number value |
| 402 | Demanding electric power value |
| 403 | Specific number |
| 404 | Received electric power value |
| 405 | Charge state |
| 406 | Priority |
| 501 | Initializing command |
| 502 | Specific number command |
| 503 | Received electric power informing command |
| 504 | Charge state informing command |
| 511 | Header |

| 512 | Length |
| --- | --- |
| 513 | Data |
| 514 | Check code |
| 600 | Random number value combination analyzer |
| 601 | Reset execution flag setter |
| 602 | Reset execution flag determiner |
| 700 | Random number value processor |
| 701 | Random number value generation determiner |
| 702 | Random number value storage/deleter |
| 703 | Timer |

**Claims**

1.  A power transmitting device that transmits electric power to at least one power receiving device in a contactless manner, the power transmitting device **characterized by** comprising:

    a power transmitter (110) possessing a power transmitting side resonant frequency that is a resonant frequency having a predetermined relation with a power receiving resonant frequency that is a resonant frequency of a part provided in the power receiving device and receiving the electric power, wherein the power transmitter transmits the electric power at the power transmitting side resonant frequency in a contactless manner;
    a data receiver (112) adapted to receive, from the power receiving device, a command including a random number value for representing a power receiving state of the power receiving device, when the power transmitter (110) is adapted to start to transmit the electric power to the power receiving device, wherein the random number value is generated by the power receiving device each time reception of the electric power is started by start of transmission of the electric power; and
    a controller (117) adapted to perform control in which the controller is adapted to determine whether or not all of the random number value satisfy a predetermined condition, when the predetermined condition is satisfied, the controller is adapted to continue transmission of the electric power to the power receiving device via the power transmitter (110), and when the predetermined condition is not satisfied, the controller is adapted to perform a reset process of temporarily stopping transmission of the electric power to the power receiving device, and then resuming the transmission of the electric power via the power transmitter (110) to receive the command including a new random number value from the power receiving device via the data receiver (112) and perform control of repeating stopping and subsequent resuming of the transmission of the electric power, and reception of the command including a further new random number value via the data receiver (112) until the new random number value satisfies the predetermined condition.

2.  The power receiving device according to Claim 1, **characterized by** comprising:

    a reset execution flag setter (601) including a reset execution flag, and adapted to set the reset execution flag in an on state or an off state; and
    a reset execution flag determiner (602) adapted to determine whether the reset execution flag is in the on state or the off state,
    wherein after the power transmitter (110) is adapted to start transmission of the electric power to the power receiving device, the controller (117) is adapted to make determination of whether the rest execution flag is in the on state or the off state, via the reset execution flag determiner (602), and only when a result of the determination indicates the on state, the controller is adapted to set the reset execution flag in the off state via the reset execution flag setter (601), and to perform the reset process of temporarily stopping the transmission of the electric power to the power receiving device, and then resuming the transmission of the electric power without waiting reception of the command including the random number value so that the command including the new random number value from the power receiving device is received, and

when the random number value includes a predetermined specific value, the controller is adapted to set the reset execution flag in the on state via the reset execution flag setter (601) regardless of a result of the determination.

3. The power receiving device according to Claim 1 or 2, **characterized in that** the data receiver (112) is adapted to receive a command including priority for causing the power receiving device to preferentially receive electric power, and

the controller (117) is adapted to set the predetermined condition for the random number value in accordance with the priority.

4. A power receiving device that receives electric power from a power transmitting device transmitting the electric power in a contactless manner, the power receiving device **characterized by** having information that shows corresponding relation between random number values and electric power receiving efficiencies,

the power receiving device comprising:

a power receiver (210) with a variable resonant frequency including a same frequency as a power transmitting side resonant frequency that is a resonant frequency of a power transmitter, the power transmitter being provided in the power transmitting device and adapted to transmit the electric power, the power receiver being adapted to receive the electric power transmitted from the power transmitting device, at a power receiving side resonant frequency that is a resonant frequency controlled within the variable range of the variable resonant frequency;

a random number value generator (216) adapted to generate a random number value;

a data transmitter (212) adapted to transmit data to the power transmitting device; and

a controller (218) adapted to perform control in which the controller is adapted to start reception of the electric power at a resonant frequency set in advance, by start of transmission of the electric power from the power transmitting device, and each time the reception of the electric power is started, the controller is adapted to generate the random number value via the random number value generator (216), to generate a command including the generated random number value, and to transmit the generated command to the power transmitting device via the data transmitter (212), wherein on the basis of an electric power receiving efficiency corresponding to the generated random number value, the controller is adapted to control the power receiving side resonant frequency within the variable range of the variable resonant frequency to continue reception of the electric power by the power receiver (210).

5. The power receiving device according to Claim 4, **characterized in that** control of the resonant frequency of the power receiver (210) based on the random number value is control of switching the power receiving side resonant frequency to one of two frequencies by time distribution depending on the random number value wherein the two frequencies are: the same frequency as the power transmitting side resonant frequency; and a frequency generating a state that does not resonate with the power transmitter.

6. The power receiving device according to Claim 4 or 5, **characterized by** further comprising:

a storage (217);

a random number value processor (700) adapted to process the random number value by predetermined calculation to generate new random number value; and

a random number value storage/deleter (702) adapted to store the generated random number value in the storage, or to delete the random number value stored in the storage,

wherein when transmission of the electric power from the power transmitting device is started, the controller (218) is adapted to newly generate, as the random number value, a random number value via the random number value generator (216) in a case where the random number value is not stored in the storage (217), and to process the stored random number value via the random number value processor (700) to generate a new random number value as the random number value in a case where the random number value is stored in the storage.

7. The power receiving device according to Claim 6, **characterized in that** after the random number value is generated, the controller (218) is adapted to delete the stored random number value in a case where the random number value stored in the storage (217) exists, and to set the electric power receiving efficiency corresponding to the generated random number value, and then, the controller is adapted to store the generated random number value in the storage (217) after a predetermined period of time elapses.

8.  The power receiving device according to any one of Claims 4 to 7, **characterized in that** the controller is adapted to transmit, to the power transmitting device, via the data transmitter (212), a command including priority for electric power reception.

9.  A power transmitting method for transmitting electric power to at least one power receiving device by a power transmitting device in a contactless manner, the method **characterized by** comprising:

> a power transmitting step of transmitting the electric power in a contactless manner at a power transmitting side resonant frequency that is a resonant frequency having a predetermined relation with a power receiving resonant frequency that is a resonant frequency of a part, the part being provided in the power receiving device and receiving the electric power;
> a data receiving step of receiving, from the power receiving device, a command including a random number value for representing a power receiving state of the power receiving device, when transmission of the electric power to the power receiving device is started at the power transmitting step, wherein the random number value is generated by the power receiving device each time the power receiving device starts to receive the electric power by start of the transmission of the electric power;
> a determining step of determining whether or not all of the random number value received at the data receiving step satisfying a predetermined condition;
> an electric power transmission continuing step of continuing transmission of the electric power to the power receiving device when it is determined at the determining step that all of the random number value satisfy the predetermined condition; and
> a repeating step of temporarily stopping transmission of the electric power to the power receiving device, and returning to the power transmitting step when it is determined at the determining step that all of the random number value do not satisfy the predetermined condition.

10. A power receiving method for receiving electric power by a power receiving device from a power transmitting device transmitting the electric power in a contactless manner, the method **characterized by** comprising:

> a random number value generating step of generating a random number value each time reception of the electric power is started by start of transmission of the electric power from the  power transmitting device;
> a data transmitting step of generating a command including the random number value generated at the random number value generating step, and transmitting the generated command to the power transmitting device; and
> a power receiving step of setting, to a predetermined resonance frequency, a power receiving side resonant frequency that is a resonant frequency of a part, the part being provided in the power receiving device and receiving the electric power, and then determining an electric power receiving efficiency corresponding to the random number value generated at the random number value generating step on the basis of information that shows corresponding relation between random number values and electric power receiving efficiencies, and performing control based on the determined electric power receiving efficiency to continue reception of the electric power transmitted from the power transmitting device.

FIG. 1

FIG. 2

## FIG. 3A

| RANDOM NUMBER VALUE | SPECIFIC NUMBER | DEMANDING ELECTRIC POWER VALUE | RECEIVED ELECTRIC POWER VALUE | CHARGE STATE |
|---|---|---|---|---|
| 0 | POWER RECEIVING DEVICE 200a | 3.0 W | 2.5 W | CHARGE IS BEING PERFORMED |

## FIG. 3B

| RANDOM NUMBER VALUE | SPECIFIC NUMBER | DEMANDING ELECTRIC POWER VALUE | RECEIVED ELECTRIC POWER VALUE | CHARGE STATE |
|---|---|---|---|---|
| 0 | POWER RECEIVING DEVICE 200a | 3.0 W | 2.5 W | CHARGE IS BEING PERFORMED |
| 3 | POWER RECEIVING DEVICE 200b | 2.0 W | 0.1 W | CHARGE IS STOPPED |

## FIG. 3C

| RANDOM NUMBER VALUE | SPECIFIC NUMBER | DEMANDING ELECTRIC POWER VALUE | RECEIVED ELECTRIC POWER VALUE | CHARGE STATE |
|---|---|---|---|---|
| 0 | POWER RECEIVING DEVICE 200a | 3.0 W | 1.5 W | CHARGE IS BEING PERFORMED |
| 1 | POWER RECEIVING DEVICE 200b | 2.0 W | 1.0 W | POWER IS BEING RECEIVED |

## FIG. 4A

/501

| | | DATA /401 /402 | |
|---|---|---|---|
| HEADER | LENGTH | RANDOM NUMBER VALUE | DEMANDING ELECTRIC POWER VALUE | CHECK CODE |

INITIALIZING COMMAND
/511  /512  /513  /514

## FIG. 4B

/502

UNIQUE NUMBER COMMAND
/511  /512  /513  /514

| | | DATA /401 /403 | |
|---|---|---|---|
| HEADER | LENGTH | RANDOM NUMBER VALUE | SPECIFIC NUMBER | CHECK CODE |

## FIG. 4C

/503

RECEIVED ELECTRIC POWER INFORMING COMMAND
/511  /512  /513  /514

| | | DATA /401 /404 | |
|---|---|---|---|
| HEADER | LENGTH | RANDOM NUMBER VALUE | RECEIVED ELECTRIC POWER VALUE | CHECK CODE |

## FIG. 4D

/504

CHARGE STATE INFORMING COMMAND
/511  /512  /513  /514

| | | DATA /401 /405 | |
|---|---|---|---|
| HEADER | LENGTH | RANDOM NUMBER VALUE | CHARGE STATE | CHECK CODE |

## FIG. 5

POWER TRANSMITTING PROCESS

S101 — POWER RECEIVING DEVICE IS DETECTED? — No / Yes

S112 — STOP ELECTRIC POWER TRANSMISSION

S102 — INITIALIZE CHARGE CONTROL TABLE

S103 — START ELECTRIC POWER TRANSMISSION

S111 — STOP ELECTRIC POWER TRANSMISION

S104 — INITIALIZING COMMAND IS RECEIVED? — NO RECEPTION / RECEPTION FAILURE / RECEPTION SUCCESS

S105 — STORE INITIALIZING COMMAND

S106 — PREDETERMINED PERIOD ELAPSES? — No / Yes

S107 — WHAT IS NUMBER OF INITIALIZNG COMMANDS? — 0, OR NOT SMALLER THAN UPPER LIMIT / NOT SMALLER THAN 1, OR SMALLER THAN UPPER LIMIT

S108 — RANDOM NUMBER VALUES SATISFY PREDETERMINED CONDITION? — No / Yes

S109 — ADJUST TRANSMISSION AMOUNT OF ELECTRIC POWER

S110 — UPDATE CHARGE CONTROL TABLE

S111 — CONTINUE ELECTRIC POWER TRANSMISSION AND UPDATE CHARGE CONTROL TABLE BY VARIOUS COMMANDS

S114 — WHAT ARE STATES OF POWER RECEIVING DEVICES? — ALL CHARGE HAS BEEN COMPLETED / RESET IS NECESSARY / CHARGE IS BEING PERFORMED

S115 — AFTER WAITING FOR PREDETERMINED PERIOD, CALCULATE LOSS IN TRANSMISSION ELECTRIC POWER

S116 — WAHT IS LOSS IN TRANSMISSION ELECTRIC POWER? — NOT SMALLER THAN PREDETERMINED VALUE / SMALLER THAN PREDETERMINED VALUE

## FIG. 6A

| RANDOM NUMBER VALUE | SPECIFIC NUMBER | DEMANDING ELECTRIC POWER VALUE | RECEIVED ELECTRIC POWER VALUE | CHARGE STATE |
|---|---|---|---|---|
| 0 | POWER RECEIVING DEVICE 200a | 3.0 W | 2.5 W | CHARGE HAS BEEN COMPLETED |
| 4 | POWER RECEIVING DEVICE 200b | 2.0 W | 0.1 W | CHARGE IS STOPPED |

## FIG. 6B

| RANDOM NUMBER VALUE | SPECIFIC NUMBER | DEMANDING ELECTRIC POWER VALUE | RECEIVED ELECTRIC POWER VALUE | CHARGE STATE |
|---|---|---|---|---|
| 5 | POWER RECEIVING DEVICE 200a | 3.0 W | 0.1 W | CHARGE HAS BEEN COMPLETED |
| 0 | POWER RECEIVING DEVICE 200b | 2.0 W | 1.5 W | POWER IS BEING RECEIVED |

## FIG. 7

```
        ┌─────────────────────────┐
        │   POWER RECEIVING       │
        │       PROCESS           │
        └─────────────────────────┘
                    │
                    ▼                          S201
        ┌─────────────────────────────────┐
        │  GENERATE RANDOM NUMBER VALUE   │
        └─────────────────────────────────┘
                    │
                    ▼                          S202
        ┌─────────────────────────────────────────┐
        │ WAIT FOR PREDETERMINED PERIOD, DEPENDING │
        │      ON RANDOM NUMBER VALLUE             │
        └─────────────────────────────────────────┘
                    │
                    ▼                          S203
        ┌─────────────────────────────────┐
        │  TRANSMIT INITIALIZING COMMAND  │
        └─────────────────────────────────┘
                    │
                    ▼                          S204
        ┌──────────────────────────────────────────┐
        │ SWITCH ELECTRIC POWER RECEIVING          │
        │ EFFICIENCY DEPENDING ON RANDOM NUMBER    │
        │                VALUE                     │
        └──────────────────────────────────────────┘
                    │
                    ▼                          S205
        ┌─────────────────────────────────┐
        │   WAIT FOR PREDETERMINED PERIOD │
        └─────────────────────────────────┘
                    │
                    ▼                          S206
        ┌─────────────────────────────────┐
        │  TRANSMIT SPECIFIC NUMBER COMMAND│
        └─────────────────────────────────┘
                    │
                    ▼                          S207  Yes
        ◄─────────────────────────────────►
          CHARGE HAS BEEN COMPLETED?              S208
                    │ No          ┌──────────────────────────────┐
                    │             │ SWITCH TO MINIMUM ELECTRIC    │
                    ◄─────────────│ POWER RECEIVING EFFICIENCY    │
                    ▼             └──────────────────────────────┘
        ┌─────────────────────────────────┐    S209
        │ TRANSMIT RECEIVED ELECTRIC POWER│
        │       INFORMING COMMAND         │
        └─────────────────────────────────┘
                    │
                    ▼                          S210
        ┌──────────────────────────────────────────┐
        │ TRANSMIT CHARGE STATE INFORMING COMMAND  │
        └──────────────────────────────────────────┘
                    │
                    ▼                          S211
        ┌─────────────────────────────────┐
        │   WAIT FOR PREDETERMINED PERIOD │
        └─────────────────────────────────┘
```

@ WHEN POWER RECEIVING DEVICE IS RESET, PROCESS RETURNS TO STEP S201 WHILE ANY OF THE ABOVE STEPS ARE BEING PERFORMED

FIG. 8

## FIG. 9A

FOR RANDOM NUMBER VALUE OF 0

ELECTRIC POWER RECEIVING EFFICIENCY

MAXIMUM ELECTRIC POWER
RECEIVING EFFICIENCY

ELECTRIC POWER
RECEIVING EFFICIENCY a

TIME

## FIG. 9B

FOR RANDOM NUMBER VALUE OF 1

ELECTRIC POWER RECEIVING EFFICIENCY

MAXIMUM ELECTRIC POWER
RECEIVING EFFICIENCY

ELECTRIC POWER
RECEIVING EFFICIENCY b

MINIMUM ELECTRIC
POWER RECEIVING
EFFICIENCY

TIME

## FIG. 9C

FOR RANDOM NUMBER VALUE OF 2

ELECTRIC POWER RECEIVING EFFICIENCY

MAXIMUM ELECTRIC POWER
RECEIVING EFFICIENCY

ELECTRIC POWER
RECEIVING EFFICIENCY c

MINIMUM ELECTRIC
POWER RECEIVING
EFFICIENCY

TIME

## FIG. 9D

FOR RANDOM NUMBER VALUE OF 3 OR MORE

ELECTRIC POWER RECEIVING EFFICIENCY

MINIMUM ELECTRIC POWER
RECEIVING EFFICIENCY

ELECTRIC POWER
RECEIVING EFFICIENCY d

TIME

40

FIG. 10

## FIG. 11A

FOR RANDOM NUMBER VALUE OF 0

ELECTRIC POWER RECEIVING EFFICIENCY

MAXIMUM ELECTRIC POWER
RECEIVING EFFICIENCY

ELECTRIC POWER
RECEIVING EFFICIENCY a

TIME

## FIG. 11B

FOR RANDOM NUMBER VALUE OF 1

ELECTRIC POWER RECEIVING EFFICIENCY

MAXIMUM ELECTRIC POWER
RECEIVING EFFICIENCY

ELECTRIC POWER
RECEIVING EFFICIENCY e

MINIMUM ELECTRIC POWER
RECEIVING EFFICIENCY

TIME

## FIG. 11C

FOR RANDOM NUMBER VALUE OF 2

ELECTRIC POWER RECEIVING EFFICIENCY

MAXIMUM ELECTRIC POWER
RECEIVING EFFICIENCY

MINIMUM ELECTRIC POWER
RECEIVING EFFICIENCY

ELECTRIC POWER
RECEIVING EFFICIENCY f

TIME

## FIG. 11D

FOR RANDOM NUMBER VALUE OF 3 OR MORE

ELECTRIC POWER RECEIVING EFFICIENCY

MAXIMUM ELECTRIC POWER
RECEIVING EFFICIENCY

ELECTRIC POWER
RECEIVING EFFICIENCY d

TIME

## FIG. 12

## FIG. 13

FIG. 14

| HEADER | LENGTH | DATA | | | CHECK CODE |
|--------|--------|------|---|---|------------|
| | | RANDOM NUMBER VALUE | DEMANDING ELECTRIC POWER VALUE | PRIORITY | |

INITIALIZING COMMAND — 501
511 512 513 514
DATA — 401 402 406

## FIG. 15A

| RANDOM NUMBER VALUE | SPECIFIC NUMBER | DEMANDING ELECTRIC POWER VALUE | RECEIVED ELECTRIC POWER VALUE | CHARGE STATE | Priority |
|---|---|---|---|---|---|
| 0 | POWER RECEIVING DEVICE 200a | 2.0 W | 1.5 W | CHARGE IS BEING PERFORMED | 90 |
| 3 | POWER RECEIVING DEVICE 200b | 3.0 W | 0.1 W | CHARGE IS STOPPED | 50 |

## FIG. 15B

| RANDOM NUMBER VALUE | SPECIFIC NUMBER | DEMANDING ELECTRIC POWER VALUE | RECEIVED ELECTRIC POWER VALUE | CHARGE STATE | Priority |
|---|---|---|---|---|---|
| 3 | POWER RECEIVING DEVICE 200a | 2.0 W | 0.1 W | CHARGE HAS BEEN COMPLETED | 90 |
| 0 | POWER RECEIVING DEVICE 200b | 3.0 W | 2.5 W | CHARGE IS BEING PERFORMED | 50 |

## FIG. 16

T = FIRST TIME

RANDOM NUMBER VALUE $R_T$ OF POWER RECEIVING DEVICE 200a:0

RANDOM NUMBER VALUE $R_T$ OF POWER RECEIVING DEVICE 200b:1

RANDOM NUMBER VALUE $R_T$ OF POWER RECEIVING DEVICE 200c:2

RESET BY POWER TRANSMITTING DEVICE (STOP AND RESUME ELECTRIC POWER TRANSMISSION)

T = SECOND TIME

RANDOM NUMBER VALUE $R_T$ OF POWER RECEIVING DEVICE 200a:2

RANDOM NUMBER VALUE $R_T$ OF POWER RECEIVING DEVICE 200b:0

RANDOM NUMBER VALUE $R_T$ OF POWER RECEIVING DEVICE 200c:1

RESET BY POWER TRANSMITTING DEVICE (STOP AND RESUME ELECTRIC POWER TRANSMISSION)

T = THIRD TIME

RANDOM NUMBER VALUE $R_T$ OF POWER RECEIVING DEVICE 200a:1

RANDOM NUMBER VALUE $R_T$ OF POWER RECEIVING DEVICE 200b:2

RANDOM NUMBER VALUE $R_T$ OF POWER RECEIVING DEVICE 200c:0

## FIG. 17

T = FIRST TIME

RANDOM NUMBER VALUE $R_T$ OF
POWER RECEIVING DEVICE 200a:0

RANDOM NUMBER VALUE $R_T$ OF
POWER RECEIVING DEVICE 200b:1

RANDOM NUMBER VALUE $R_T$ OF
POWER RECEIVING DEVICE 200c:1

RESET BY POWER TRANSMITTING DEVICE (STOP
AND RESUME ELECTRIC POWER TRANSMISSION)

T = SECOND TIME

RANDOM NUMBER VALUE $R_T$ OF
POWER RECEIVING DEVICE 200a:1

RANDOM NUMBER VALUE $R_T$ OF
POWER RECEIVING DEVICE 200b:0

RANDOM NUMBER VALUE $R_T$ OF
POWER RECEIVING DEVICE 200c:0

## FIG. 18

T = FIRST TIME

RANDOM NUMBER VALUE $R_T$ OF POWER RECEIVING DEVICE 200a:0

RANDOM NUMBER VALUE $R_T$ OF POWER RECEIVING DEVICE 200b:1

RANDOM NUMBER VALUE $R_T$ OF POWER RECEIVING DEVICE 200c:2

RESET BY POWER TRANSMITTING DEVICE (STOP AND RESUME ELECTRIC POWER TRANSMISSION)

T = SECOND TIME

RANDOM NUMBER VALUE $R_T$ OF POWER RECEIVING DEVICE 200a:2

RANDOM NUMBER VALUE $R_T$ OF POWER RECEIVING DEVICE 200b:0

RANDOM NUMBER VALUE $R_T$ OF POWER RECEIVING DEVICE 200c:1

RESET BY POWER TRANSMITTING DEVICE (STOP AND RESUME ELECTRIC POWER TRANSMISSION)

N = THIRD TIME

RANDOM NUMBER VALUE RT OF POWER RECEIVING DEVICE 200a:1

RANDOM NUMBER VALUE RT OF POWER RECEIVING DEVICE 200b:2

RANDOM NUMBER VALUE RT OF POWER RECEIVING DEVICE 200c:0

FIG. 19

200a

200c

100

200b

↓

200a    200b    200c

T = FIRST TIME

RANDOM NUMBER VALUE R$_T$ OF
POWER RECEIVING DEVICE 200a:0

RANDOM NUMBER VALUE R$_T$ OF
POWER RECEIVING DEVICE 200b:0

RANDOM NUMBER VALUE R$_T$ OF
POWER RECEIVING DEVICE 200c:0

## FIG. 20A

FOR RANDOM NUMBER VALUE OF 0

ELECTRIC POWER
RECEIVING EFFICIENCY

MAXIMUM ELECTRIC POWER
RECEIVING EFFICIENCY

ELECTRIC POWER
RECEIVING EFFICIENCY a

TIME

## FIG. 20B

FOR RANDOM NUMBER VALUE OTHER THAN 0

ELECTRIC POWER
RECEIVING EFFICIENCY

MINIMUM ELECTRIC POWER
RECEIVING EFFICIENCY

ELECTRIC POWER
RECEIVING EFFICIENCY d

TIME

## FIG. 21

FIG. 22

## FIG. 23

```
              POWER TRANSMITTING PROCESS

        STOP ELECTRIC
      POWER TRANSMISSION              S101
                                                        S112
    S113       POWER RECEIVING      No
               DEVICE IS DETECTED?              STOP ELECTRIC
                                              POWER TRANSMISION
                   Yes

         INITIALIZE CHARGE CONTROL TABLE       S102

         START ELECTRIC POWER TRANSMISSION     S103

    S121                                    S120
      REST EXECUTION FLAG= OFF    Yes   RESET EXECUTION FLAG IS ON?
                                                      No

       NO                          S104
    RECEPTION                                      RECEPTION FAILURE
           INITIALIZING COMMAND IS RECEIVED?
          RECEPTION SUCCESS          S105

           STORE INITIALIZING COMMAND

                                    S106
       No    PREDETERMINED
             PERIOD ELAPSES?                                S110

   0, OR NOT SMALLER   Yes                      UPDATE CHARGE
   THAN UPPER LIMIT          S107               CONTROL TABLE
           WHAT IS NUMBER OF
           INITIALIZNG COMMANDS?       S111
                                                CONTINUE ELECTRIC POWER
                        NOT SMALLER THAN        TRANSMISSION, AND PDATE
                        1, OR SMALLER           CHARGE CONTROL TABLE
        S108            THAN UPPER LIMIT         BY VARIOUS COMMANDS
          RANDOM NUMBER VALUES     No
          SATISFY PREDETERMINED        ALL CHARGE
          CONDITION?                   HAS BEEN              RESET IS
                Yes              S109   COMP-     WHAT ARE   NECE-
                                       LETED     STATES OF  SSARY
          ADJUST TRANSMISSION                    POWER
          AMOUNT OF ELECTRIC POWER              RECEIVING
                                S122            DEVICES?    S110
          RANDOM NUMBER VALUES R       S115            CHARGE IS BEING
     Yes  INCLUDE R=[(R FOR RECEIVING                  PERFORMED
          AT MAXIMUM ELECTRIC POWER            AFTER WAITING FOR
          RECEIVING EFFICIENCY)+1]?            PREDETERMINED PERIOD,
                No              S123           CALCULATE LOSS IN
          RESET EXECUTION FLAG = ON            TRANSMISSION ELECTRIC
                                               POWER

                                                         SMALLER THAN
    NOT SMALLER THAN          S116              PREDETERMINED
    PREDETERMINED VALUE   WAHT IS LOSS IN TRANSMISSION   VALUE
                          ELECTRIC POWER?
```

## FIG. 24

```
        ┌──────────────────────────────┐
        │   POWER RECEIVING PROCESS    │
        └──────────────────────────────┘
                      │
                      ▼                          S220
        ╱──────────────────────────────╲   No
       ⟨  RANDOM NUMBER VALUE Rt-1      ⟩────────────────────┐
        ╲  GENERATED LAST TIME IS HELD?╱                     │
                      │ Yes                                  │
                      ▼          S221                        │  S201
        ┌──────────────────────────────┐      ┌─────────────────────┐
        │  PERFORM CALCULATION ON Rt-1 │      │  GENERATE RANDOM    │
        │ TO GENERATE RANDOM MUNBER    │      │  MUNBER VALUE       │
        │ VALUE TO BE USED THIS TIME   │      └─────────────────────┘
        └──────────────────────────────┘                    │
                      │◄──────────────────────────────────────┘
                      ▼                          S222
        ┌──────────────────────────────┐
        │ DELETE RANDOM MUNBER VALUE   │
        │ IN STORAGE                   │
        └──────────────────────────────┘
                      │                          S202
                      ▼
        ┌──────────────────────────────┐
        │ WAIT FOR PREDETERMINED       │
        │ PERIOD, DEPENDING ON         │
        │ RANDOM NUMBER VALUE          │
        └──────────────────────────────┘
                      │                          S203
                      ▼
        ┌──────────────────────────────┐
        │ TRANSMIT INITIALIZING COMMAND│
        └──────────────────────────────┘
                      │                          S204
                      ▼
        ┌──────────────────────────────┐
        │ SWITCH ELECTRIC POWER        │
        │ RECEIVING EFFICIENCY         │
        │ DEPENDING ON RANDOM          │
        │ NUMBER VALUE                 │
        └──────────────────────────────┘
                      │                          S205
                      ▼
        ┌──────────────────────────────┐
        │ WAIT FOR PREDETERMINED PERIOD│
        └──────────────────────────────┘
                      │                          S223
                      ▼
        ┌──────────────────────────────┐
        │ START TO MEASURE T1          │
        └──────────────────────────────┘
                      │◄───────────────────┐
                      ▼          S224       │
                  ╱────────╲   No           │
                 ⟨ T1 ELAPSES?⟩─────────────┘
                  ╲────────╱
                      │ Yes    S225
                      ▼
        ┌──────────────────────────────┐
        │ STORE Rt                     │
        └──────────────────────────────┘
                      │                          S226
                      ▼
        ┌──────────────────────────────┐
        │ PERFORM PROCESS OF S206      │
        │ TO S211                      │
        └──────────────────────────────┘
```

@ WHEN POWER RECEIVING DEVICE IS RESET, PROCESS RETURNS TO
STEP S220 WHILE ANY OF THE ABOVE STEPS ARE BEING PERFORMED

## INTERNATIONAL SEARCH REPORT

| International application No. |
| --- |
| PCT/JP2012/058758 |

### A. CLASSIFICATION OF SUBJECT MATTER
*H02J17/00*(2006.01)i

According to International Patent Classification (IPC) or to both national classification and IPC

### B. FIELDS SEARCHED

Minimum documentation searched (classification system followed by classification symbols)
H02J17/00, H02J7/00

Documentation searched other than minimum documentation to the extent that such documents are included in the fields searched

| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2009-22122 A (Toko, Inc.), 29 January 2009 (29.01.2009), entire text; fig. 1 to 7 & US 2009/0015210 A1 | 1-10 |
| A | JP 2009-268311 A (Sony Corp.), 12 November 2009 (12.11.2009), entire text; fig. 1 to 17 & US 2009/0271048 A1 | 1-10 |
| A | JP 2010-16985 A (Sanyo Electric Co., Ltd.), 21 January 2010 (21.01.2010), entire text; fig. 1 to 7 & US 2010/0001845 A1 & CN 101621220 A | 1-10 |

☒ Further documents are listed in the continuation of Box C.　　☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 24 May, 2012 (24.05.12) | 05 June, 2012 (05.06.12) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/058758

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2010/116441 A1  (Fujitsu Ltd.),<br>14 October 2010 (14.10.2010),<br>paragraphs [0043] to [0069]; fig. 4 to 6<br>(Family: none) | 1-10 |
| A | JP 2001-92930 A  (Nippon Telegraph and<br>Telephone Corp.),<br>06 April 2001 (06.04.2001),<br>paragraphs [0011] to [0013], [0026], [0027]<br>(Family: none) | 1-10 |
| P,A | JP 2011-234508 A  (Canon Inc.),<br>17 November 2011 (17.11.2011),<br>entire text; fig. 1 to 7<br>& CN 102237726 A | 1-10 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010063245 A
- JP 2011081722 A